# EUROPEAN PATENT SPECIFICATION

(11) **EP 3 026 924 B1**
(45) Date of publication and mention of the grant of the patent: **07.11.2018**
(21) Application number: 14829097.6
(22) Date of filing: 06.06.2014
(51) Int. Cl.: H04N 21/4627, H04N 21/4405, H04H 20/93, H04H 60/16, H04H 60/23, H04H 60/43

(54) **REPRODUCTION CONTROL DEVICE, REPRODUCTION CONTROL METHOD, AND PROGRAM**
WIEDERGABESTEUERUNGSVORRICHTUNG, WIEDERGABESTEUERUNGSVERFAHREN UND PROGRAMM
DISPOSITIF DE COMMANDE DE REPRODUCTION, PROCÉDÉ DE COMMANDE DE REPRODUCTION, ET PROGRAMME

(30) Priority: 23.07.2013 JP 2013152831
(43) Date of publication of application: 01.06.2016
(73) Proprietor: Sony Corporation, Tokyo 108-0075 (JP)
(72) Inventor: SOMA, Isao, Tokyo 108-0075 (JP)
(74) Representative: Witte, Weller & Partner Patentanwälte mbB
(86) International application number: PCT/JP2014/065059
(87) International publication number: WO 2015/012001

(56) References cited:
- EP-A1- 2 432 222
- JP-A- 2000 090 066
- JP-A- 2003 152 698
- JP-A- 2004 112 788
- JP-A- 2004 240 957
- JP-A- 2006 129 063
- JP-A- 2008 288 893
- JP-A- 2009 164 977
- JP-A- 2010 119 034
- US-A1- 2009 013 172
- US-A1- 2010 169 931
- US-A1- 2011 156 879

## Description

### Technical Field

The present disclosure relates to a reproduction control device, a reproduction control method, and a program.

### Background Art

For example, there has been developed a technology for decrypting, on the basis of information acquired from outside, an encrypted content signal that is broadcasted via a predetermined channel. The technology for decrypting an encrypted content signal is, for example, a technology disclosed in the following Patent Literature 1.

### Citation List

### Patent Literature

Patent Literature 1: JP 2010-268091A

EP 2432222 A1 discloses a transmitting apparatus and transmitting method as well as a receiving apparatus and receiving method configured to be able to recognize only channel selection information for digital broadcasting that is viewable at the receiving end. A communication unit transmits a viewing license and channel selection information to a receiving apparatus that receives digital broadcasting. The viewing license includes a license expiration date given as terms of use for content of digital broadcasting, and a scramble key for unlocking scrambling applied to content. The channel selection information is information related to digital broadcasting channel selection.

Further prior art can be found in US 2011/156879 A1, US 2010/169931 A1 and US 2009/013172 A1.

### Summary of Invention

### Technical Problem

For example, in the case where a content signal is broadcasted via an electromagnetic wave, a wired network, or the like, the content signal is transmitted via a predetermined channel (transmission line). A device capable of reproducing a content signal performs processing related to reproduction, such as decoding, with respect to the content signal received via the predetermined channel and therefore reproduces the content signal.

Here, for example, in the case where a content signal is broadcasted as described above, in some cases, it is desirable to allow, among devices capable of reproducing a content signal, only a device provided in a specific place (or area) or a specific device to reproduce the content signal that is broadcasted via the predetermined channel. However, there is no method for restricting reproduction of a content signal that is broadcasted via the predetermined channel in, for example, the foregoing case.

The present disclosure proposes a reproduction control device, a reproduction control method, and a program, each of which is new and improved and is capable of controlling reproduction of a content signal that is broadcasted via a predetermined channel.

### Solution to Problem

According to the present disclosure, there is provided a reproduction control device as defined in claim 1.

According to the present disclosure, there is provided a reproduction control method as defined in claim 14.

According to the present disclosure, there is provided a program as defined in claim 15.

### Advantageous Effects of Invention

According to the present disclosure, it is possible to control reproduction of a content signal that is broadcasted via a predetermined channel.

### Brief Description of Drawings

[FIG. 1] FIG. 1 is an explanatory view illustrating processing related to a reproduction control method according to an embodiment.
[FIG. 2] FIG. 2 is a flow chart showing an example of processing related to a reproduction control method according to an embodiment.
[FIG. 3] FIG. 3 is a block diagram showing an example of a configuration of a reproduction control device according to an embodiment.
[FIG. 4] FIG. 4 is an explanatory view showing an example of a hardware configuration of a reproduction control device according to an embodiment.

### Description of Embodiments

Hereinafter, (a) preferred embodiment(s) of the present disclosure will be described in detail with reference to the appended drawings. In this specification and the drawings, elements that have substantially the same function and structure are denoted with the same reference signs, and repeated explanation is omitted.

Hereinafter, description will be provided in the following order.
1. Reproduction control method according to the embodiment
2. Reproduction control device according to the embodiment
3. Program according to the embodiment

### (Reproduction control method according to the embodiment)

A reproduction control method according to the embodiment will be described prior to description of a reproduction control device according to the embodiment. In the following description, the reproduction control method according to the embodiment will be described exemplifying a case where processing related to the reproduction control method according to the embodiment is performed by the reproduction control device according to the embodiment.

### [1] Overview of processing related to reproduction control method according to the embodiment

As described above, in the case where a content signal is broadcasted via a predetermined channel, there is no method for restricting reproduction of the content signal that is transmitted via the predetermined channel.

In view of this, the reproduction control device according to the embodiment acquires, from an external object (described below), information on reproduction of an encrypted content signal that is broadcasted via a predetermined channel (acquisition control processing).

Here, the content signal according to the embodiment is, for example, a signal indicating an image (moving image or still image), sound (including music), a character (character string), or an arbitrary combination thereof. Note that the content signal according to the embodiment is not limited to the foregoing examples. For example, the content signal according to the embodiment may include signals indicating various pieces of data such as data indicating a coupon and data of various applications including a game.

A broadcast of a signal according to the embodiment is, for example, transmission of a signal using an electromagnetic wave, such as transmission of a signal in a television broadcast, transmission of a signal in a radio broadcast, or transmission of a signal using a wireless communication technology such as a wireless local area network (LAN). The broadcast of the signal according to the embodiment may also be, for example, transmission of a signal via a wired network, such as transmission of a signal using a wired communication technology such as a LAN.

The information on reproduction according to the embodiment contains, for example, channel identification information, reproduction condition information, and key information. The information on reproduction according to the embodiment may be, for example, a piece of data in which pieces of information are combined with each other or a data group in which pieces of information are individual pieces of data, respectively.

The channel identification information according to the embodiment is data indicating a channel via which an encrypted content signal is broadcasted. The channel indicated by the channel identification information corresponds to the foregoing predetermined channel. The channel identification information according to the embodiment is, for example, data capable of specifying a transmission line via which a content signal is transmitted, such as data indicating a frequency (or frequency band), data indicating a physical channel, or data indicating an internet protocol (IP) address. Further, the channel identification information according to the embodiment may contain, for example, data related to connection for use in connection to an access point or the like (for example, an ID such as a service set identifier (SSID), an authentication key, or a uniform resource locator (URL)).

The reproduction condition information according to the embodiment is data indicating a reproduction condition that is a condition for reproducing a content signal. An example of the reproduction condition according to the embodiment will be described below.

The key information according to the embodiment is data for decrypting a content signal. The key information according to the embodiment is, for example, data indicating a key value for decrypting an encrypted content signal. A key related to encryption of a content signal and a key related to decryption of the content signal may be, for example, the same or corresponding keys. The key information according to the embodiment may be, for example, a part of a key value for decrypting an encrypted content signal. Further, the key information according to the embodiment may be, for example, a key for decrypting encrypted key information for watching a broadcast wave, which is superimposed on the broadcast wave.

Note that information contained in the information on reproduction according to the embodiment is not limited to the channel identification information, the reproduction condition information, or the key information. For example, the information on reproduction according to the embodiment may further contain object identification information and acquisition source information.

The object identification information according to the embodiment is data uniquely indicating an external object according to the embodiment. The object identification information according to the embodiment is, for example, data indicating a unique ID.

In the case where the object identification information is contained in the information on reproduction according to the embodiment, the reproduction control device according to the embodiment stores the acquired object identification information in, for example, a recording medium. Here, the recording medium in which the object identification information is stored is, for example, a storage unit (described below) included in the reproduction control device according to the embodiment, an external recording medium connected to the reproduction control device according to the embodiment, or a recording medium included in an external device communicable with the reproduction control device according to the embodiment.

The acquisition source information according to the embodiment is data indicating an acquisition source of a reproduction application that is usable for reproducing a content signal that is broadcasted via the channel indicated by the channel identification information. The acquisition source information according to the embodiment is, for example, a URL indicating a download source of the reproduction application or a parameter related to download. An example of processing using the acquisition source information in the reproduction control device according to the embodiment will be described below.

In the case where the information on reproduction is acquired by the acquisition control processing, the reproduction control device according to the embodiment determines whether or not the reproduction condition indicated by the acquired reproduction condition information is satisfied (determination processing).

In the case where it is determined that the reproduction condition is satisfied, the reproduction control device according to the embodiment decrypts a content signal that is received via the channel (predetermined channel) indicated by the acquired channel identification information with the use of the acquired key information and reproduces the content signal (reproduction control processing). The reproduction control processing according to the embodiment is, for example, processing for decrypting an encrypted content signal, such as processing for descrambling.

The reproduction control device according to the embodiment performs the reproduction control processing with the use of, for example, various processing circuits (hardware). Note that the reproduction control device according to the embodiment is not limited to performing the reproduction control processing with the use of various processing circuits. For example, the reproduction control device according to the embodiment may perform the reproduction control processing by causing a processor such as a micro processing unit (MPU) to execute a reproduction application (software) that is usable for reproducing a content signal.

In the case where a content signal that is received via the channel indicated by the acquired channel identification information is reproduced by the reproduction control processing, the reproduction control device according to the embodiment counts, for example, the number of times of reproduction of the content signal. In the foregoing case, the reproduction control device according to the embodiment may count, for example, the number of times of use of the key information for use in decryption.

Meanwhile, in the case where it is determined that the reproduction condition is not satisfied, the reproduction control device according to the embodiment does not reproduce the content signal that is broadcasted via the predetermined channel even if the reproduction control device receives the content signal that is broadcasted via the predetermined channel.

As processing related to the reproduction control method according to the embodiment, the reproduction control device according to the embodiment performs, for example, (1) acquisition control processing, (2) determination processing, and (3) reproduction control processing.

In the case where it is determined that the reproduction condition is satisfied in the (2) determination processing, the reproduction control device according to the embodiment decrypts a content signal that is received via the channel (predetermined channel) indicated by the acquired channel identification information with the use of the acquired key information and reproduces the content signal in the (3) reproduction control processing. The channel identification information, the reproduction condition information indicating the reproduction condition, and the key information are acquired from the external object by the (1) acquisition control processing.

That is, in the case where the reproduction control method according to the embodiment is used, for example, a device that satisfies the following conditions is allowed to reproduce a content signal that is broadcasted via the predetermined channel, whereas a device that does not satisfy the following conditions is not allowed to reproduce the content signal.
- To acquire the information on reproduction according to the embodiment from the external object
- To satisfy the reproduction condition indicated by the reproduction condition information contained in the acquired information on reproduction according to the embodiment

By performing, for example, (1) acquisition control processing, (2) determination processing, and (3) reproduction control processing as the processing related to the reproduction control method according to the embodiment, the reproduction control device according to the embodiment can control reproduction of a content signal that is transmitted via the predetermined channel.

Further, by performing the processing related to the reproduction control method according to the embodiment, reproduction of a content signal that is transmitted via the predetermined channel is controlled on the basis of the reproduction condition indicated by the reproduction condition information, and therefore it is possible to cause a device that satisfies the reproduction condition (for example, a device existing in a specific place or a device corresponding to a specific user) to selectively reproduce a content signal that is transmitted via the predetermined channel.

Further, as described above, the reproduction control device according to the embodiment decrypts a content signal that is received via the channel (predetermined channel) indicated by the acquired channel identification information with the use of the acquired key information and reproduces the content signal. Therefore, for example, the reproduction control device according to the embodiment can reproduce even a content signal that is broadcasted via a channel that has not been preset in the reproduction control device according to the embodiment.

### [2] Processing related to reproduction control method according to the embodiment

The processing related to the reproduction control method according to the embodiment will be described more specifically.

### (1) Acquisition control processing

The reproduction control device according to the embodiment acquires information on reproduction according to the embodiment from the external object. The reproduction control device according to the embodiment acquires the information on reproduction according to the embodiment from the external object by controlling an acquisition device related to acquisition of the information on reproduction according to the embodiment.

Here, the acquisition device according to the embodiment is, for example, a communication device capable of communicating with the external object (in the case where the information on reproduction according to the embodiment is acquired by communicating with the external object) or an image pickup device that captures an image of the external object (in the case where the information on reproduction according to the embodiment is acquired from a captured image of the external object). For example, the acquisition device according to the embodiment may be included in the reproduction control device according to the embodiment or may be an external device connected to the reproduction control device according to the embodiment. In the following description, there will be mainly described an example where the reproduction control device according to the embodiment includes the acquisition device according to the embodiment.

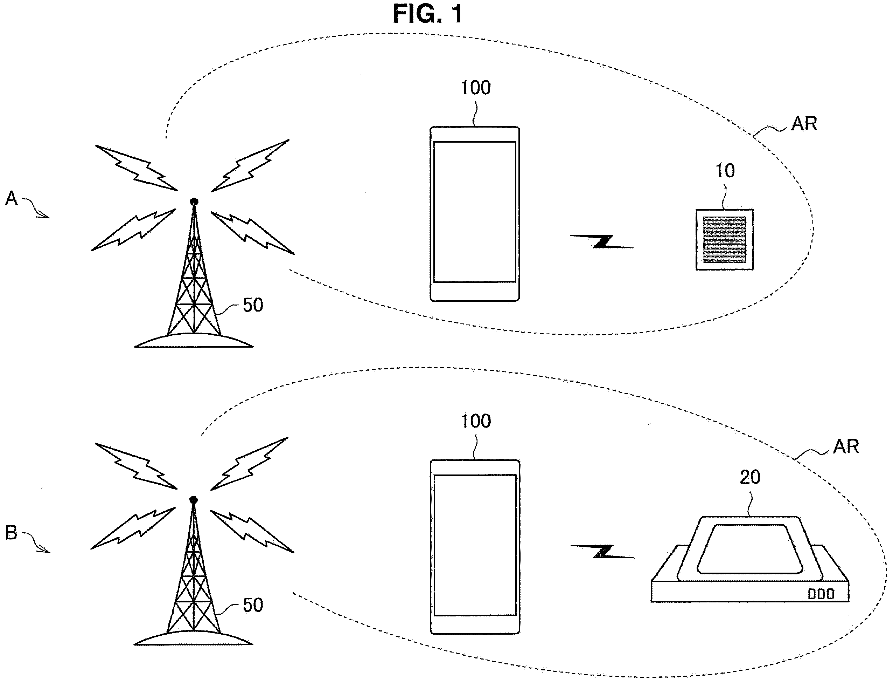

FIG. 1 is an explanatory view illustrating processing related to the reproduction control method according to the embodiment. FIG. 1 is a conceptual diagram illustrating a case where the reproduction control device according to the embodiment acquires information on reproduction according to the embodiment from the external object according to the embodiment by communication.

In FIG. 1, the reproduction control device according to the embodiment is denoted by a reference sign 100, and FIG. 1 illustrates an example where the reproduction control device according to the embodiment is a smartphone. Further, in FIG. 1, the external object according to the embodiment is denoted by a reference sign 10 or a reference sign 20, and FIG. 1 illustrates an example where the external object according to the embodiment is an RF tag (A in FIG. 1) and an example where the external object according to the embodiment is a reader/writer (B in FIG. 1). Further, in FIG. 1, a broadcast transmission station that broadcasts a content signal according to the embodiment is denoted by a reference sign 50 and an area where a content signal is broadcasted is denoted by a reference sign AR. It is needless to say that the reproduction control device according to the embodiment, the external object according to the embodiment, and the broadcast transmission station according to the embodiment are not limited to the examples illustrated in FIG. 1.

The external object according to the embodiment is, for example, a device capable of performing wireless communication with the reproduction control device according to the embodiment with the use of a wireless communication technology such as a communication technology using near field communication (NFC) or a radio frequency identification (RFID) technology, such as an RF tag (transponder), an IC card (transponder), and a reader/writer (interrogator).

In the case where the external object according to the embodiment is, for example, the RF tag illustrated in A of FIG. 1 or an IC card, the acquisition device according to the embodiment serves as an interrogator. In the foregoing case, for example, the acquisition device according to the embodiment mainly transmits a carrier wave, communicates with the external object according to the embodiment which exists within a communicable range, and receives information on reproduction according to the embodiment transmitted from the external object. Communication between the acquisition device according to the embodiment and the external object is controlled by the reproduction control device according to the embodiment.

In the case where the external object according to the embodiment is, for example, the reader/writer illustrated in B of FIG. 1, the acquisition device according to the embodiment serves as a transponder. In the foregoing case, for example, the acquisition device according to the embodiment is driven by obtaining electric power from a carrier wave transmitted from the external object according to the embodiment which exists within the communicable range, communicates with the external object, and receives information on reproduction according to the embodiment transmitted from the external object. Communication between the acquisition device according to the embodiment and the external object is controlled by the reproduction control device according to the embodiment.

As illustrated in, for example, A and B of FIG. 1, the external object according to the embodiment positions in, for example, an area where a content signal is broadcasted. Note that the external object according to the embodiment is not limited to positioning in the area where a content signal is broadcasted. For example, the external object according to the embodiment may position outside the area where a content signal is broadcasted. A position outside the area where a content signal is broadcasted is, for example, a position related to contents indicated by a content signal in an area outside the area where the content signal is broadcasted (for example, in the case where the contents indicated by the content signal are contents related to a product or a service, the position is a position of the product or the like in an event).

Note that the external object according to the embodiment is not limited to a device capable of performing wireless communication with the reproduction control device according to the embodiment with the use of a wireless communication technology such as a communication technology using NFC or an RFID technology.

For example, the external object according to the embodiment is a device capable of performing communication with the reproduction control device according to the embodiment by an arbitrary communication method in which the communicable range is equal to or smaller than the area where a content signal is broadcasted, such as communication using a signal within a sound frequency band (for example, a signal within a frequency band audible to human beings, such as a frequency band from 300 [Hz] to 3400 [Hz]) or optical communication that is communication performed with the use of light such as visible light or infrared light. Further, the acquisition device according to the embodiment is, for example, a communication device having a communication function corresponding to a communication function that the external object according to the embodiment has. Communication between the acquisition device according to the embodiment and the external object is controlled by the reproduction control device according to the embodiment.

The external object according to the embodiment may be a two-dimensional code such as a matrix-type two-dimensional code or a three-dimensional code. In the case where the external object according to the embodiment is a two-dimensional code or a three-dimensional code, the acquisition device according to the embodiment is, for example, an image pickup device capable of generating a captured image of the external object according to the embodiment. Image capturing of the external object in the acquisition device according to the embodiment is controlled by the reproduction control device according to the embodiment. Further, the reproduction control device according to the embodiment analyzes a code such as a two-dimensional code included in a captured image, thereby obtaining information on reproduction according to the embodiment from the code.

In the following description, there will be described an example where the external object according to the embodiment is a device capable of performing wireless communication with the reproduction control device according to the embodiment with the use of a wireless communication technology such as a communication technology using NFC or an RFID technology.

### (2) Determination processing

The reproduction control device according to the embodiment determines whether or not the reproduction condition indicated by the reproduction condition information acquired by the processing (1) (acquisition control processing) is satisfied.

### (2-1) First example of determination processing: a case where the reproduction condition includes a condition regarding a reception state of a signal that is broadcasted via a channel indicated by channel identification information

In the case where the reproduction condition includes the condition regarding the reception state, the reproduction control device according to the embodiment determines whether or not the condition regarding the reception state is satisfied on the basis of the reception state of the signal that is broadcasted via the channel indicated by the channel identification information acquired by the processing (1) (acquisition control processing). Then, the reproduction control device according to the embodiment determines whether or not the reproduction condition is satisfied on the basis of a determination result of the condition regarding the reception state.

The condition regarding the reception state according to the embodiment is, for example, to receive a signal that is broadcasted via the channel indicated by the channel identification information.

More specifically, the reproduction control device according to the embodiment controls a signal reception device capable of receiving a broadcasted signal so that the signal reception device receives a signal that is broadcasted via the channel indicated by the channel identification information.

Here, the signal reception device according to the embodiment is, for example, a tuner that is electrically connected to an antenna. Further, the signal reception device according to the embodiment may include the antenna. For example, the signal reception device according to the embodiment may be included in the reproduction control device according to the embodiment or may be an external device connected to the reproduction control device according to the embodiment. In the following description, there will be mainly described an example where the reproduction control device according to the embodiment includes the signal reception device according to the embodiment.

For example, in the case where a signal that is broadcasted via the channel indicated by the channel identification information is transmitted via the signal reception device or in the case where a level of a transmitted signal is equal to or larger than a set predetermined level (or in the case where the level of the transmitted signal is larger than the predetermined level), that is, in the case where a signal that is broadcasted via the channel indicated by the channel identification information is normally received, the reproduction control device according to the embodiment determines that the condition regarding the reception state is satisfied. Then, the reproduction control device according to the embodiment determines that the reproduction condition is satisfied.

Meanwhile, in the case where a signal that is broadcasted via the channel indicated by the channel identification information is not normally received, for example, in a case where a signal that is broadcasted via the channel indicated by the channel identification information is not transmitted via the signal reception device, the reproduction control device according to the embodiment determines that the condition regarding the reception state is not satisfied. Then, the reproduction control device according to the embodiment determines that the reproduction condition is not satisfied.

In the case where the reproduction condition includes the condition regarding the reception state, for example, the reproduction control device according to the embodiment determines whether or not the reproduction condition is satisfied on the basis of the determination result of the condition regarding the reception state as described above.

By, for example, determining whether or not the reproduction condition is satisfied on the basis of the determination result of the condition regarding the reception state as described above, it is possible to restrict devices that are allowed to reproduce a broadcasted content signal on the basis of an area where a broadcasted content signal is receivable. Therefore, by, for example, determining whether or not the reproduction condition is satisfied on the basis of the determination result of the condition regarding the reception state as described above, reproduction of a content signal that is broadcasted via the predetermined channel can be controlled more flexibly.

Note that the determination processing performed in the case where the reproduction condition includes the condition regarding the reception state is not limited to the foregoing example.

For example, in the case where a user who possesses the reproduction control device according to the embodiment is moved from an area where a content signal is broadcasted to an area outside the area where a content signal is broadcasted, the following phenomenon may occur in the determination processing: it is determined that the condition regarding the reception state is satisfied and then it is determined that the condition regarding the reception state is not satisfied. In the case where it is determined that the condition regarding the reception state is satisfied and then it is determined that the condition regarding the reception state is not satisfied as described above, for example, the reproduction control device according to the embodiment does not need to newly perform determination with the use of the reproduction condition indicated by the reproduction condition information which has been used for determining that the condition regarding the reception state is not satisfied.

In the case where the reproduction control device does not newly perform determination with the use of the reproduction condition indicated by the reproduction condition information which has been used for determining that the condition regarding the reception state is not satisfied, for example, when a reproduction condition information is newly acquired by the processing (1) (acquisition control processing), the reproduction control device according to the embodiment determines whether or not a reproduction condition indicated by the reproduction condition information that is newly acquired is satisfied. That is, in the foregoing case, when, for example, reproduction condition information is newly acquired by the processing (1) (acquisition control processing), the reproduction control device according to the embodiment performs the determination processing on the basis of the reproduction condition information that is newly acquired.

As described above, in the case where it is determined that the condition regarding the reception state is satisfied and then it is determined that the condition regarding the reception state is not satisfied, the reproduction control device does not newly perform determination with the use of the reproduction condition indicated by the reproduction condition information which has been used for determining that the condition regarding the reception state is not satisfied. Therefore, the reproduction control device according to the embodiment can control reproduction of a content signal that is broadcasted via the predetermined channel more flexibly.

### (2-2) Second example of determination processing: a case where the reproduction condition includes a condition regarding a combination of a plurality of pieces of object identification information

The information on reproduction according to the embodiment can further contain object identification information uniquely indicating an external object as described above. Further, for example, in the case where the information on reproduction according to the embodiment contains the object identification information, the reproduction control device according to the embodiment stores the object identification information in the recording medium.

In the case where the reproduction condition includes the condition regarding the combination of the plurality of pieces of the object identification information, the reproduction control device according to the embodiment determines whether or not the condition regarding the combination is satisfied on the basis of the object identification information acquired by the processing (1) (acquisition control processing) and the object identification information stored in the recording medium. Then, the reproduction control device according to the embodiment determines whether or not the reproduction condition is satisfied on the basis of a determination result of the condition regarding the combination.

The condition regarding the combination according to the embodiment is that, for example, the combination of the pieces of the obtained object identification information is matched with a specific combination of two or three or more pieces of object identification information. Further, the condition regarding the combination according to the embodiment may be that, for example, one or two or more pieces of specific object identification information are obtained and the predetermined number of pieces of object identification information is obtained.

More specifically, for example, in the case where a combination of the object identification information that is newly acquired by the processing (1) (acquisition control processing) and the object identification information stored in the recording medium is matched with a combination defined in the condition regarding the combination, the reproduction control device according to the embodiment determines that the condition regarding the combination is satisfied. Then, the reproduction control device according to the embodiment determines that the reproduction condition is satisfied.

Meanwhile, for example, in the case where a combination of the object identification information that is newly acquired by the processing (1) (acquisition control processing) and the object identification information stored in the recording medium is not matched with a combination defined in the condition regarding the combination, the reproduction control device according to the embodiment determines that the condition regarding the combination is not satisfied. Then, the reproduction control device according to the embodiment determines that the reproduction condition is not satisfied.

By, for example, determining whether or not the reproduction condition is satisfied on the basis of the determination result of the condition regarding the combination as described above, it is possible to further restrict devices that are allowed to reproduce a broadcasted content signal. Therefore, by, for example, determining whether or not the reproduction condition is satisfied on the basis of the determination result of the condition regarding the combination as described above, reproduction of a content signal that is broadcasted via the predetermined channel can be controlled more flexibly.

### (2-3) Third example of determination processing: a case where the reproduction condition includes a condition regarding a period in which reproduction of a content signal that is broadcasted via the channel indicated by the channel identification information is allowed

In the case where the reproduction condition includes the condition regarding the period in which reproduction is allowed, the reproduction control device according to the embodiment determines whether or not the condition regarding the period in which reproduction is allowed is satisfied. Then, the reproduction control device according to the embodiment determines whether or not the reproduction condition is satisfied on the basis of a determination result of the condition regarding the period in which reproduction is allowed.

The condition regarding the period in which reproduction is allowed according to the embodiment is that, for example, a time at which determination is performed is in the period in which reproduction is allowed (for example, from what year, month, date to what year, month, date). As the condition regarding the period in which reproduction is allowed according to the embodiment, for example, a condition in which the time at which determination is performed is in a time period in which reproduction is allowed (from what time to what time) may be further defined.

More specifically, in the case where, for example, the time at which determination is performed is in the period indicated by the condition regarding the period in which reproduction is allowed, the reproduction control device according to the embodiment determines that the condition regarding the period in which reproduction is allowed is satisfied. Then, the reproduction control device according to the embodiment determines that the reproduction condition is satisfied.

Meanwhile, in the case where, for example, the time at which determination is performed is not in the period indicated by the condition regarding the period in which reproduction is allowed, the reproduction control device according to the embodiment determines that the condition regarding the period in which reproduction is allowed is not satisfied. Then, the reproduction control device according to the embodiment determines that the reproduction condition is not satisfied.

By, for example, determining whether or not the reproduction condition is satisfied on the basis of the determination result of the condition regarding the period in which reproduction is allowed as described above, it is possible to further restrict devices that are allowed to reproduce a broadcasted content signal on the basis of the period that is set as a condition. Therefore, by, for example, determining whether or not the reproduction condition is satisfied on the basis of the determination result of the condition regarding the period in which reproduction is allowed as described above, reproduction of a content signal that is broadcasted via the predetermined channel can be controlled more flexibly.

### (2-4) Fourth example of determination processing: a case where the reproduction condition includes a condition regarding an effective period of key information in which use of the key information is allowed

In the case where the reproduction condition includes the condition regarding the effective period of the key information, the reproduction control device according to the embodiment determines whether or not the condition regarding the effective period of the key information is satisfied. Then, the reproduction control device according to the embodiment determines whether or not the reproduction condition is satisfied on the basis of a determination result of the condition regarding the effective period of the key information.

The condition regarding the effective period of the key information according to the embodiment is that, for example, a time at which determination is performed is in the period in which the key information is effective (for example, from what year, month, date to what year, month, date). As the condition regarding the effective period of the key information according to the embodiment, for example, a condition in which the time at which determination is performed is in a time period in which the key information is effective (from what time to what time) may be further defined.

More specifically, in the case where, for example, the time at which determination is performed is in the period in which the key information is effective, which is indicated by the condition regarding the effective period of the key information, the reproduction control device according to the embodiment determines that the condition regarding the effective period of the key information is satisfied. Then, the reproduction control device according to the embodiment determines that the reproduction condition is satisfied.

Meanwhile, in the case where, for example, the time at which determination is performed is not in the period in which the key information is effective, which is indicated by the condition regarding the effective period of the key information, the reproduction control device according to the embodiment determines that the condition regarding the effective period of the key information is not satisfied. Then, the reproduction control device according to the embodiment determines that the reproduction condition is not satisfied.

By, for example, determining whether or not the reproduction condition is satisfied on the basis of the determination result of the condition regarding the condition regarding the effective period of the key information as described above, it is possible to further restrict devices that are allowed to reproduce a broadcasted content signal on the basis of the effective period of the key information that is set as a condition. Therefore, by, for example, determining whether or not the reproduction condition is satisfied on the basis of the determination result of the condition regarding the effective period of the key information as described above, reproduction of a content signal that is broadcasted via the predetermined channel can be controlled more flexibly.

Meanwhile, in the case where it is determined that the condition regarding the effective period of the key information is not satisfied, for example, the reproduction control device according to the embodiment may delete the key information acquired in the processing (1) (acquisition control processing). By deleting the key information as described above, a broadcasted content signal cannot be decrypted with the use of the key information. Therefore, by deleting the key information as described above, the reproduction control device according to the embodiment can restrict more strictly reproduction of a content signal that is broadcasted via the predetermined channel.

### (2-5) Fifth example of determination processing: a case where the reproduction condition includes a condition regarding a position where reproduction of a content signal that is broadcasted via the channel indicated by the channel identification information is allowed

In the case where the reproduction condition includes the condition regarding the position, the reproduction control device according to the embodiment determines whether or not the condition regarding the position is satisfied. Then, the reproduction control device according to the embodiment determines whether or not the reproduction condition is satisfied on the basis of a determination result of the condition regarding the position.

The condition regarding the position according to the embodiment is that, for example, a position where the determination processing is performed is in a set area.

More specifically, for example, in the case where a position where determination is performed, which is detected by a position detection device, is in the area that is set as a condition or is matched with a position that is set as a condition, the reproduction control device according to the embodiment determines that the condition regarding the position is satisfied. Then, the reproduction control device according to the embodiment determines that the reproduction condition is satisfied. Detection of the position in the position detection device according to the embodiment is controlled by, for example, the reproduction control device according to the embodiment.

The position detection device according to the embodiment is, for example, a global positioning system (GPS) device. Further, the position detection device according to the embodiment may be an arbitrary device capable of specifying a position, such as a device capable of specifying a position by using, for example, wireless communication with a base station or an access point. For example, the position detection device according to the embodiment may be included in the reproduction control device according to the embodiment or may be an external device connected to the reproduction control device according to the embodiment.

Meanwhile, for example, in the case where the position where determination is performed, which is detected by the position detection device, is not in the area that is set as a condition or is not matched with the position that is set as a condition, the reproduction control device according to the embodiment determines that the condition regarding the position is not satisfied. Then, the reproduction control device according to the embodiment determines that the reproduction condition is not satisfied.

By, for example, determining whether or not the reproduction condition is satisfied on the basis of the determination result of the condition regarding the condition regarding the position as described above, it is possible to further restrict devices that are allowed to reproduce a broadcasted content signal on the basis of the area or the position which is set as a condition. Therefore, by, for example, determining whether or not the reproduction condition is satisfied on the basis of the determination result of the condition regarding the position as described above, reproduction of a content signal that is broadcasted via the predetermined channel can be controlled more flexibly.

### (2-6) Sixth example of determination processing: a case where the reproduction condition includes a condition regarding the number of times of reproduction in which reproduction of a content signal that is broadcasted via the channel indicated by the channel identification information is allowed

In the case where the reproduction condition includes the condition regarding the number of times of reproduction, the reproduction control device according to the embodiment determines whether or not the number of times of reproduction of a content signal satisfies the condition regarding the number of times of reproduction. Then, the reproduction control device according to the embodiment determines whether or not the reproduction condition is satisfied on the basis of a determination result of the condition regarding the number of times of reproduction.

The condition regarding the number of times of reproduction according to the embodiment is that, for example, the number of times of reproduction of a content signal that is broadcasted via the channel indicated by the channel identification information is equal to or smaller than the set number of times of reproduction.

More specifically, for example, in the case where the number of times of reproduction that is counted in the processing (3) (reproduction control processing) is equal to or smaller than the set number of times of reproduction (or in the case where the counted number of times of reproduction is smaller than the set number of times of reproduction), the reproduction control device according to the embodiment determines that the condition regarding the number of times of reproduction is satisfied. Then, the reproduction control device according to the embodiment determines that the reproduction condition is satisfied.

Meanwhile, for example, in the case where the number of times of reproduction that is counted in the processing (3) (reproduction control processing) is larger than the set number of times of reproduction (or in the case where the counted number of times of reproduction is equal to or larger than the set number of times of reproduction), the reproduction control device according to the embodiment determines that the condition regarding the number of times of reproduction is not satisfied. Then, the reproduction control device according to the embodiment determines that the reproduction condition is not satisfied.

By, for example, determining whether or not the reproduction condition is satisfied on the basis of the determination result of the condition regarding the number of times of reproduction as described above, it is possible to further restrict devices that are allowed to reproduce a broadcasted content signal on the basis of the number of times of reproduction which is set as a condition. Therefore, by, for example, determining whether or not the reproduction condition is satisfied on the basis of the determination result of the condition regarding the number of times of reproduction as described above, reproduction of a content signal that is broadcasted via the predetermined channel can be controlled more flexibly.

### (2-7) Seventh example of determination processing: a case where the reproduction condition includes a condition regarding the effective number of times of key information in which use of the key information is allowed

In the case where the reproduction condition includes the condition regarding the effective number of times of the key information, the reproduction control device according to the embodiment determines whether or not the number of times of use of the key information in the processing (3) (reproduction control processing) satisfies the condition regarding the effective number of times of the key information. Then, the reproduction control device according to the embodiment determines whether or not the reproduction condition is satisfied on the basis of a determination result of the condition regarding the effective number of times of the key information.

The condition regarding the effective number of times of the key information according to the embodiment is that, for example, the number of times of use of the key information is equal to or smaller than the set effective number of times thereof.

More specifically, for example, in the case where the number of times of use of the key information counted in the processing (3) (reproduction control processing) is equal to or smaller than the set effective number of times thereof (or in the case where the counted number of times of use thereof is smaller than the set effective number of times thereof), the reproduction control device according to the embodiment determines that the condition regarding the effective number of times of the key information is satisfied. Then, the reproduction control device according to the embodiment determines that the reproduction condition is satisfied.

Meanwhile, for example, in the case where the number of times of use of the key information counted in the processing (3) (reproduction control processing) is larger than the set effective number of times thereof (or in the case where the counted number of times of use thereof is equal to or larger than the set effective number of times thereof), the reproduction control device according to the embodiment determines that the condition regarding the effective number of times of the key information is not satisfied. Then, the reproduction control device according to the embodiment determines that the reproduction condition is not satisfied.

By, for example, determining whether or not the reproduction condition is satisfied on the basis of the determination result of the condition regarding the effective number of times of the key information as described above, it is possible to further restrict devices that are allowed to reproduce a broadcasted content signal on the basis of the effective number of times of the key information which is set as a condition. Therefore, by, for example, determining whether or not the reproduction condition is satisfied on the basis of the determination result of the condition regarding the effective number of times of the key information as described above, reproduction of a content signal that is broadcasted via the predetermined channel can be controlled more flexibly.

Meanwhile, in the case where it is determined that the condition regarding the effective number of times of the key information is not satisfied, for example, the reproduction control device according to the embodiment may delete the key information acquired in the processing (1) (acquisition control processing). By deleting the key information as described above, a broadcasted content signal cannot be decrypted with the use of the key information. Therefore, by deleting the key information as described above, the reproduction control device according to the embodiment can restrict more strictly reproduction of a content signal that is broadcasted via the predetermined channel.

### (2-8) Eighth example of determination processing: a case where the reproduction condition includes a condition regarding a user who is allowed to reproduce a content signal that is broadcasted via the channel indicated by the channel identification information

In the case where the reproduction condition includes the condition regarding a user, the reproduction control device according to the embodiment determines whether or not the condition regarding a user is satisfied on the basis of user identification information. Then, the reproduction control device according to the embodiment determines whether or not the reproduction condition is satisfied on the basis of a determination result of the condition regarding a user.

The user identification information according to the embodiment is data indicating at least one of the reproduction control device according to the embodiment and a user of the reproduction control device according to the embodiment. The user identification information according to the embodiment is, for example, data indicating an ID or a model name of the reproduction control device according to the embodiment, data indicating a serial number thereof, or data indicating a version name of an operating system (OS) thereof (in the case where the user identification information according to the embodiment is the data indicating the reproduction control device according to the embodiment). Further, the user identification information according to the embodiment is, for example, individual data of a user, such as data indicating the user's name, data indicating sex, data indicating age, data indicating nationality, or data indicating a religion that the user believes (in the case where the user identification information according to the embodiment is the data indicating the user of the reproduction control device according to the embodiment).

The condition regarding a user according to the embodiment is that, for example, "the ID of the reproduction control device according to the embodiment indicated by the user identification information is matched with a set ID", "the model name indicated by the user identification information is included in set model names", "the version of the OS indicated by the user identification information is included in versions of set OSs", or "the serial number indicated by the user identification information is matched with a set serial number". Further, the condition regarding a user according to the embodiment is that, for example, "the user's name indicated by the user identification information is matched with a set user's name", "the sex indicated by the user identification information is matched with a set sex", "the age indicated by the user identification information is included in set target ages", "a country indicated by the nationality indicated by the user identification information is included in set countries", or "the religion indicated by the user identification information is included in set religions". Further, for example, the condition regarding a user according to the embodiment may be a combination of the foregoing conditions. It is needless to say that the condition regarding a user according to the embodiment is not limited to the foregoing examples.

More specifically, for example, in the case where contents indicated by the user identification information satisfy the condition regarding a user, the reproduction control device according to the embodiment determines that the condition regarding a user is satisfied. Then, the reproduction control device according to the embodiment determines that the reproduction condition is satisfied.

Further, for example, in the case where contents indicated by the user identification information do not satisfy the condition regarding a user, the reproduction control device according to the embodiment determines that the condition regarding a user is not satisfied. Then, the reproduction control device according to the embodiment determines that the reproduction condition is not satisfied.

By, for example, determining whether or not the reproduction condition is satisfied on the basis of the determination result of the condition regarding a user as described above, it is possible to restrict devices that are allowed to reproduce a broadcasted content signal on the basis of an attribute of the reproduction control device according to the embodiment or an attribute of the user of the reproduction control device according to the embodiment. Therefore, by, for example, determining whether or not the reproduction condition is satisfied on the basis of the determination result of the condition regarding a user as described above, reproduction of a content signal that is broadcasted via the predetermined channel can be controlled more flexibly.

### (2-9) Ninth example of determination processing

As the determination processing, the reproduction control device according to the embodiment can also perform, for example, processing obtained by arbitrarily combining two or more kinds of the determination processing according to the first example to the determination processing according to the eighth example. Here, in the case where the determination processing according to the ninth example is performed, the reproduction control device according to the embodiment determines that, for example, the reproduction condition is satisfied in the case where it is determined that the reproduction condition is satisfied in one of the combined two or more kinds of determination processing. Further, in the case where the determination processing according to the ninth example is performed, the reproduction control device according to the embodiment may determine that, for example, the reproduction condition is satisfied in the case where it is determined that the reproduction condition is satisfied in the predetermined number of kinds of determination processing among the combined two or more kinds of determination processing.

As the determination processing, the reproduction control device according to the embodiment performs, for example, any one of the determination processing according to the first example to the determination processing according to the ninth example.

### (2-10) Another example of determination processing

For example, the reproduction condition information may include, as the reproduction condition, a condition regarding a result of processing performed with the external device. The processing performed with the external device according to the embodiment is, for example, accounting processing or authentication processing. In the case where the condition regarding the result of the processing performed with the external device is included therein as the reproduction condition, the reproduction condition information contains, for example, information for communicating with the external device regarding the processing (for example, data indicating a URL, a processing parameter, or the like).

In the case where the condition regarding the result of the processing performed with the external device is included therein as the reproduction condition, for example, the reproduction control device according to the embodiment determines whether or not the condition regarding the result of the processing performed with the external device is satisfied on the basis of data indicating the result of the processing performed with the external device.

More specifically, for example, in the case where data indicating that the processing performed with the external device has been normally completed (for example, payment information indicating that payment has been completed or authentication information indicating that authentication has been completed) is stored in a recording medium such as a storage unit (described below), the reproduction control device according to the embodiment determines that the condition regarding the result of the processing performed with the external device is satisfied. Then, the reproduction control device according to the embodiment determines that the reproduction condition is satisfied.

Meanwhile, in the case where the data indicating that the processing performed with the external device has been normally completed is not stored in the recording medium such as the storage unit (described below), the reproduction control device according to the embodiment, for example, communicates with the external device with the use of the information for communicating with the external device regarding the processing, the information being contained in the reproduction condition information, and performs the processing with the external device.

In the case where the data indicating the result of the processing performed with the external device is the data indicating that the processing performed with the external device has been normally completed, the reproduction control device according to the embodiment determines that the condition regarding the result of the processing performed with the external device is satisfied. Then, the reproduction control device according to the embodiment determines that the reproduction condition is satisfied.

Meanwhile, in the case where the data indicating the result of the processing performed with the external device is not the data indicating that the processing performed with the external device has been normally completed, the reproduction control device according to the embodiment determines that the condition regarding the result of the processing performed with the external device is not satisfied. Then, the reproduction control device according to the embodiment determines that the reproduction condition is not satisfied.

By, for example, determining whether or not the reproduction condition is satisfied on the basis of the determination result of the condition regarding the result of the processing performed with the external device as described above, it is possible to further restrict devices that are allowed to reproduce a broadcasted content signal on the basis of the result of the processing performed with the external device which is set as a condition. Therefore, by, for example, determining whether or not the reproduction condition is satisfied on the basis of the determination result of the condition regarding the result of the processing performed with the external device as described above, reproduction of a content signal that is broadcasted via the predetermined channel can be controlled more flexibly.

As the determination processing, the reproduction control device according to the embodiment can also perform, for example, processing obtained by combining the determination processing according to the first example to the determination processing according to the ninth example with the processing related to the another example.

### (3) Reproduction control processing

In the case where it is determined that the reproduction condition is satisfied in the processing (2) (determination processing), the reproduction control device according to the embodiment decrypts a content signal that is received via the channel indicated by the channel identification information acquired by the processing (1) (acquisition control processing) with the use of the key information acquired by the processing (1) (acquisition control processing) and reproduces the content signal.

The reproduction control device according to the embodiment can also perform, for example, the following processing as the reproduction control processing.

### (3-1) First example of reproduction control processing

The reproduction control device according to the embodiment sets, on the basis of the user identification information according to the embodiment, the way to reproduce a content signal received via the channel indicated by the acquired channel identification information. Then, the reproduction control device according to the embodiment reproduces a content signal in accordance with the set way to reproduce the content signal.

Here, examples of setting of the way to reproduce a content signal on the basis of the user identification information are as follows, for example. It is needless to say that examples of setting of the way to reproduce a content signal on the basis of the user identification information are not limited to the following examples.
- To select language of sound indicated by a content signal on the basis of nationality indicated by the user identification information
- To perform selection regarding accessibility, such as selection of a size of a character indicated by a content signal or selection of a position where the character is displayed, on the basis of age indicated by the user identification information

The reproduction control device according to the embodiment reproduces a content signal in accordance with, for example, the way to reproduce a content signal which is set on the basis of the user identification information as described above, and therefore it is possible to further improve usability for a user.

### (3-2) Second example of reproduction control processing

In the foregoing description, there has been described an example where a content signal that is broadcasted via the channel indicated by the channel identification information is encrypted by the key information (hereinafter, also called "first key information") contained in the information on reproduction or by key information corresponding to the key information. However, encryption of the content signal according to the embodiment is not limited to the foregoing example. For example, the content signal that is broadcasted via the channel indicated by the channel identification information may be encrypted to correspond to the first key information and second key information different from the first key information.

In the case where a content signal that is broadcasted via the channel indicated by the channel identification information is encrypted to correspond to the first key information and the second key information, for example, the reproduction control device according to the embodiment decrypts the content signal received via the channel indicated by the channel identification information acquired by the processing (1) (acquisition control processing) with the use of the first key information acquired by the processing (1) (acquisition control processing) and the second key information stored in the recording medium and reproduces the content signal.

Here, the recording medium in which the second key information is stored is, for example, a storage unit (described below) included in the reproduction control device according to the embodiment, an external recording medium connected to the reproduction control device according to the embodiment, or a recording medium included in an external device communicable with the reproduction control device according to the embodiment.

The second key information according to the embodiment is, for example, key information that is stored in the recording medium in advance.

Note that the second key information used by the reproduction control device according to the embodiment in the reproduction control processing according to the second example is not limited to the key information that is stored in the recording medium in advance.

The second key information according to the embodiment may be, for example, key information that is acquired from an external device different from an external object such as a server and is recorded in the recording medium. The key information that is acquired from the external device is, for example, key information for reproducing a content signal related to pay broadcast. For example, the reproduction control device according to the embodiment performs accounting processing related to acquisition of the second key information with the external device. Then, after the accounting processing is completed, the reproduction control device according to the embodiment acquires the second key information from the external device.

### (3-3) Third example of reproduction control processing

The information on reproduction according to the embodiment can further contain acquisition source information indicating an acquisition source of a reproduction application as described above. Further, for example, the reproduction control device according to the embodiment reproduces a content signal by executing the reproduction application.

Here, in the case where there is no application capable of reproducing a received content signal, the reproduction control device according to the embodiment acquires the reproduction application from an acquisition source indicated by acquisition source information. For example, the reproduction control device according to the embodiment controls a communication device so that the communication device performs communication with a device corresponding to the acquisition source indicated by the acquisition source information (for example, a server that stores the reproduction application), thereby acquiring the reproduction application from the acquisition source.

Then, the reproduction control device according to the embodiment reproduces the received content signal with the use of the acquired reproduction application. The reproduction control device according to the embodiment, for example, installs the acquired reproduction application and executes the installed reproduction application. Note that, in the case where the acquired reproduction application is an application that does not need to be installed, the reproduction control device according to the embodiment can execute the acquired reproduction application without installing the acquired reproduction application.

The information on reproduction according to the embodiment further contains the acquisition source information, and therefore, for example, the reproduction control device according to the embodiment can reproduce the received content signal with the use of the reproduction application acquired from the acquisition source indicated by the acquisition source information as described above. Therefore, because the information on reproduction according to the embodiment further contains the acquisition source information and the reproduction control processing according to the third example is performed, the reproduction control device according to the embodiment can reproduce the received content signal even in the case where there is no application capable of reproducing the content signal.

Therefore, because the information on reproduction according to the embodiment further contains the acquisition source information and the reproduction control processing according to the third example is performed, it is possible to further improve usability for a user.

### (3-4) Fourth example of reproduction control processing

As the reproduction control processing, the reproduction control device according to the embodiment can also perform, for example, processing obtained by arbitrarily combining two or more kinds of the reproduction control processing according to the first example to the reproduction control processing according to the third example.

As the reproduction control processing, the reproduction control device according to the embodiment can perform, for example, the reproduction control processing according to the first example to the reproduction control processing according to the fourth example. It is needless to say that examples of the reproduction control processing according to the embodiment are not limited to the reproduction control processing according to the first example to the reproduction control processing according to the fourth example.

### [3] Specific example of processing related to reproduction control method according to the embodiment

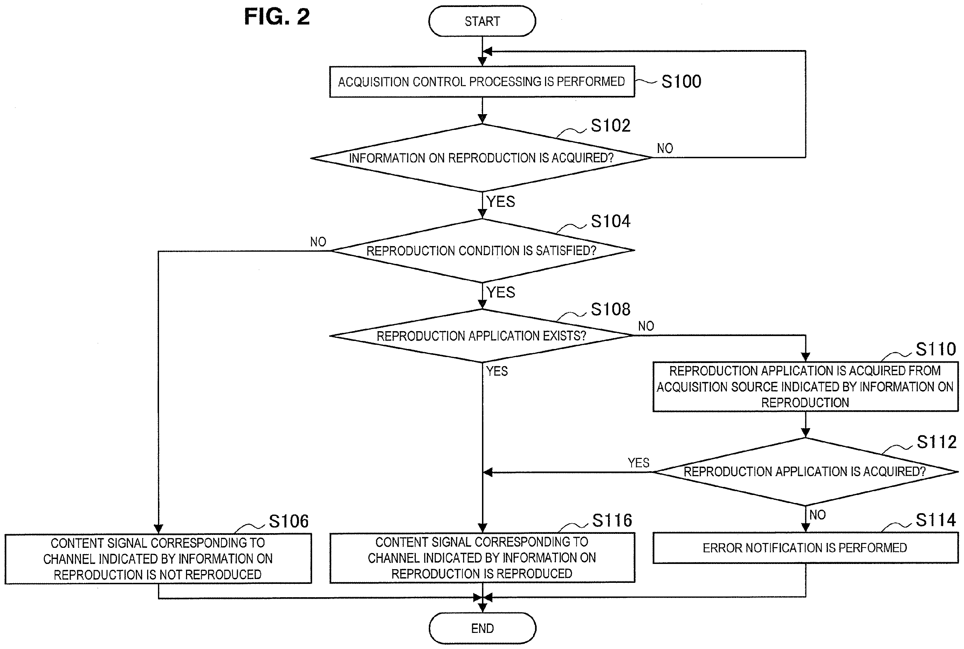

A specific example of the processing related to the reproduction control method according to the embodiment will be described. FIG. 2 is a flow chart showing an example of the processing related to the reproduction control method according to the embodiment. Here, processing in Step S102 of FIG. 2 corresponds to the processing (1) (acquisition control processing). Processing in Step S104 of FIG. 2 corresponds to the processing (2) (determination processing). Processing in Steps S106 to S112 of FIG. 2 corresponds to the processing (3) (reproduction control processing).

The reproduction control device according to the embodiment performs the acquisition control processing (SI00). Here, the reproduction control device according to the embodiment starts the acquisition control processing by using a predetermined user's operation as a trigger. However, the trigger to start the acquisition control processing is not limited to the predetermined user's operation. For example, in the case where the external object is a reader/writer, the reproduction control device according to the embodiment may start the acquisition control processing by using, as a trigger, detection of a signal (for example, polling signal) related to a carrier wave transmitted from the external object.

In the case where the processing in Step S100 is performed, the reproduction control device according to the embodiment determines whether or not information on reproduction is acquired (SI02).

In the case where it is determined that the information on reproduction is not acquired in Step S102, the reproduction control device according to the embodiment repeats processing from, for example, Step S100.

Meanwhile, in the case where it is determined that the information on reproduction is acquired in Step S102, the reproduction control device according to the embodiment determines, for example, whether or not a reproduction condition indicated by reproduction condition information contained in the information on reproduction acquired by the processing in Step S100 is satisfied (SI04).

In the case where it is determined that the reproduction condition is not satisfied in Step S104, the reproduction control device according to the embodiment does not reproduce a content signal corresponding to a channel indicated by channel identification information contained in the information on reproduction acquired by the processing in Step S100 (S106).

In the case where the content signal is not reproduced in Step S106, the reproduction control device according to the embodiment may notify a user that the content signal is not reproduced. The reproduction control device according to the embodiment controls, for example, a display device or a sound output device so that the display device or the sound output device performs notification that the content signal is not reproduced with the use of a character, an image, or sound. Here, for example, the display device or the sound output device may be included in the reproduction control device according to the embodiment or may be a device outside the reproduction control device according to the embodiment.

In the case where it is determined that the reproduction condition is satisfied in Step S104, the reproduction control device according to the embodiment determines, for example, whether or not a reproduction application exists (S108).

In the case where it is determined that the reproduction application exists in Step S108, the reproduction control device according to the embodiment performs processing in Step S116 to be described below.

Meanwhile, in the case where it is determined that the reproduction application does not exist in Step S108, the reproduction control device according to the embodiment controls, for example, a communication device to acquire the reproduction application from an acquisition source indicated by acquisition source information contained in the information on reproduction acquired by the processing in Step S100 (S110). Then, it is determined whether or not the reproduction application is acquired (S112).

In the case where it is determined that the reproduction application is not acquired in Step S112, the reproduction control device according to the embodiment controls, for example, the display device or the sound output device to perform an error notification that, for example, "the content signal is not reproduced because the reproduction application cannot be acquired" with respect to a user (S114).

Meanwhile, in the case where it is determined that the reproduction application exists in Step S108, or in the case where it is determined that the reproduction application is acquired in Step S112, the reproduction control device according to the embodiment reproduces the content signal corresponding to the channel indicated by the channel identification information contained in the information on reproduction acquired by the processing in Step S100 (S116).

The reproduction control device according to the embodiment performs, for example, the processing shown in FIG. 2 as the processing related to the reproduction control method according to the embodiment. The processing (1) (acquisition control processing) to the processing (3) (reproduction control processing) are achieved by performing, for example, the processing shown in FIG. 2. Therefore, the reproduction control device according to the embodiment can control reproduction of a content signal that is broadcasted via the predetermined channel by performing, for example, the processing shown in FIG. 2.

It is needless to say that the processing related to the reproduction control method according to the embodiment is not limited to the processing shown in FIG. 2.

### (Reproduction control device according to the embodiment)

There will be described an example of a configuration of the reproduction control device according to the embodiment capable of performing the foregoing processing related to the reproduction control method according to the embodiment.

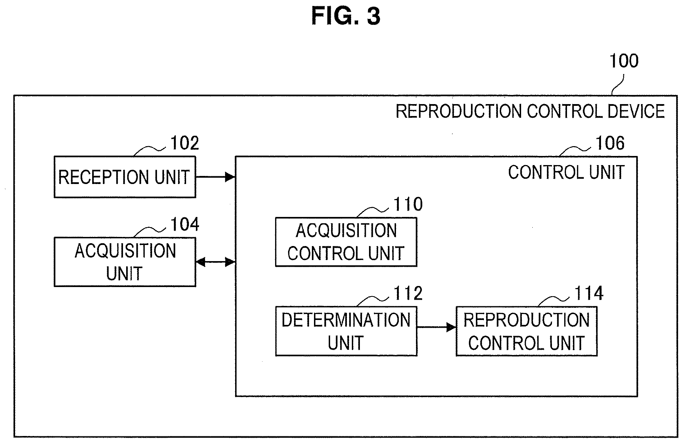

FIG. 3 is a block diagram showing an example of a configuration of the reproduction control device 100 according to the embodiment. The reproduction control device 100 includes, for example, a reception unit 102, an acquisition unit 104, and a control unit 106.

The reproduction control device 100 may further include, for example, a read only memory (ROM; not illustrated), a RAM (not illustrated), a storage unit (not illustrated), an operation unit (not illustrated) that is operable by a user, and a display unit (not illustrated) that displays various screens on a display screen. For example, the reproduction control device 100 connects the foregoing elements via a bus serving as a transmission line of data.

Here, the ROM (not illustrated) stores a program used by the control unit 106 or control data such as arithmetic parameters. The RAM (not illustrated) temporarily stores a program executed by the control unit 106.

The storage unit (not illustrated) is storage means included in the reproduction control device 100 and stores various kinds of data including information on the reproduction control method according to the embodiment, such as object identification information and key information, and an application. Here, the storage unit (not illustrated) is, for example, a magnetic recording medium such as a hard disk or a nonvolatile memory such as a flash memory. Further, the storage unit (not illustrated) may be, for example, a recording medium having a tamper resistance and may be detachable from the reproduction control device 100.

An example of the operation unit (not illustrated) includes an operation input device to be described below and an example of the display unit (not illustrated) includes a display device to be described below.

### [Hardware configuration example of reproduction control device 100]

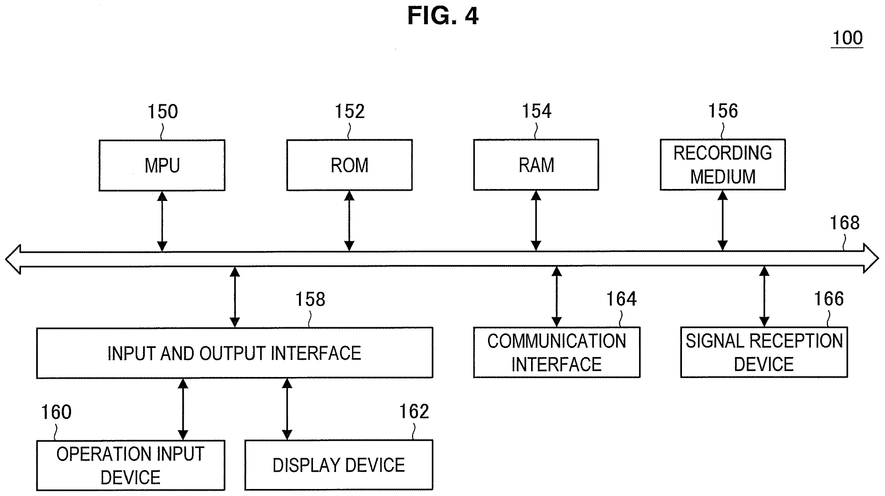

FIG. 4 is an explanatory view showing an example of a hardware configuration of the reproduction control device 100 according to the embodiment. The reproduction control device 100 includes, for example, an MPU 150, a ROM 152, a RAM 154, a recording medium 156, an input and output interface 158, an operation input device 160, a display device 162, a communication interface 164, and a signal reception device 166. Further, the reproduction control device 100 connects those elements via, for example, a bus 168 serving as a transmission line of data.

The MPU 150 includes, for example, a processor such as a MPU, various processing circuits, and the like and functions as the control unit 106 that controls the whole reproduction control device 100. The MPU 150 also serves as, for example, an acquisition control unit 110, a determination unit 112, and a reproduction control unit 114 to be described below in the reproduction control device 100.

The ROM 152 stores control data such as calculation parameters and a program used by the MPU 150. The RAM 154 temporarily stores, for example, a program executed by the MPU 150.

The recording medium 156 functions as the storage unit (not illustrated) and stores various kinds of data including information on the reproduction control method according to the embodiment, such as object identification information and key information, and an application. Here, the recording medium 156 is, for example, a magnetic recording medium such as a hard disk or a nonvolatile memory such as a flash memory. Further, the recording medium 156 may be, for example, a recording medium having a tamper resistance and may be detachable from the reproduction control device 100.

The input and output interface 158 connects, for example, the operation input device 160 or the display device 162. The operation input device 160 functions as an operation unit (not illustrated) and the display device 162 functions a display unit (not illustrated). Here, examples of the input and output interface 158 include a Universal Serial Bus (USB) terminal, a Digital Visual Interface (DVI) terminal, a High-Definition Multimedia Interface (HDMI) (registered trademark) terminal, and various processing circuits. For example, the operation input device 160 is included in the reproduction control device 100 and is connected to the input and output interface 158 in the reproduction control device 100. Examples of the operation input device 160 include a button, a direction key, a rotation type selector such as a jog dial, and a combination thereof. For example, the display device 162 is included in the reproduction control device 100 and is connected to the input and output interface 158 in the reproduction control device 100. Examples of the display device 162 include a liquid crystal display (LCD) and an organic electroluminescence (EL) display (also called an organic light emitting diode (OLED) display).

It is needless to say that the input and output interface 158 can be connected to an external device such as an operation input device (for example, a keyboard or a mouse), a display device, or the like serving as an external device of the reproduction control device 100. Examples of the display device 162 may be a device through which display and a user's operation are possible, such as a touch screen.

The communication interface 164 is communication means included in the reproduction control device 100. The communication interface 164 functions as the acquisition unit 104 that acquires information on reproduction according to the embodiment by communicating with, for example, an external object according to the embodiment. That is, the communication interface 164 corresponds to an example of the foregoing acquisition device according to the embodiment.

Here, the communication interface 164 functioning as the acquisition unit 104 is, for example, a communication device related to NFC such as a transmission/reception circuit (for example, transmission/reception circuit functioning as a reader/writer) serving as an interrogator in NFC or a transmission/reception circuit (for example, IC chip) serving as a transponder in NFC. In the case where the communication interface 164 is the communication device related to NFC, for example, the communication interface 164 may include an antenna and perform communication via the antenna included therein or may be connected to an external antenna and perform communication via the external antenna.

Note that the communication interface 164 functioning as the acquisition unit 104 is not limited to the communication device related to NFC. For example, the communication interface 164 may be a communication device employing an arbitrary communication method in which a communicable range is equal to or smaller than an area where a content signal is broadcasted, such as a communication device that performs communication using a signal within a sound frequency band of a modem or the like or an optical communication device that performs communication using light such as visible light or infrared light.

The communication interface 164 can include, for example, a plurality of communication interfaces employing the same communication method or different communication methods. In the case where the plurality of communication interfaces are included therein, for example, the communication interface 164 may be configured by a single integrated circuit (IC) or a plurality of ICs. Further, in the case where the plurality of communication interfaces are included therein, for example, the communication interface 164 may include an antenna or may be connected to an external antenna.

The communication interface 164 may function as, for example, a communication unit (not illustrated) for communicating with an external device such as a server via a network (or directly) in a wireless or wired manner.

The communication interface 164 functioning as the communication unit (not illustrated) is, for example, various communication devices capable of communicating with an external device such as a communication antenna and a radio frequency (RF) circuit (wireless communication), an IEEE802.15.1 port and a transmission/reception circuit (wireless communication), an IEEE802.11 port and a transmission/reception circuit (wireless communication), or a local area network (LAN) terminal and a transmission/reception circuit (wired communication). Examples of the network according to the embodiment include a wired network such as a local area network (LAN) or a wide area network (WAN), a wireless network such as a wireless local area network (WLAN) or a wireless wide area network (WWAN) via a base station, and the Internet using a communication protocol such as Transmission Control Protocol/Internet Protocol (TCP/IP).

Note that, in the foregoing description, the communication interface 164 functioning as the acquisition unit 104 and the communication interface 164 functioning as the communication unit (not illustrated) have been separately described. However, the acquisition unit 104 and the communication unit (not illustrated) may be, for example, the same function block or different function blocks in the reproduction control device 100. Further, in the case where the acquisition unit 104 and the communication unit (not illustrated) are different function blocks in the reproduction control device 100, the acquisition unit 104 and the communication unit (not illustrated) may be configured by, for example, a single IC or a plurality of ICs.

The signal reception device 166 functions as the reception unit 102 that receives a broadcasted signal. The signal reception device 166 is, for example, a tuner that is electrically connected to an antenna. Further, the signal reception device 166 may include the antenna.

With, for example, the configuration shown in FIG. 4, the reproduction control device 100 performs the processing related to the reproduction control method according to the embodiment. Note that the hardware configuration of the reproduction control device 100 according to the embodiment is not limited to the configuration shown in FIG. 4.

For example, the reproduction control device 100 may include an image pickup device that captures an image (moving image or still image). In the case where the reproduction control device 100 includes the image pickup device, the image pickup device functions as, for example, the acquisition unit 104 that captures an image of the external object according to the embodiment and acquires the information on reproduction according to the embodiment. That is, in the case where the reproduction control device 100 includes the image pickup device, the image pickup device corresponds to an example of the acquisition device according to the embodiment.

Here, the image pickup device according to the embodiment is, for example, a lens/image pickup element and a signal processing circuit. The lens/image pickup element includes, for example, an optical lens and an image sensor including a plurality of image pickup elements such as complementary metal oxide semiconductors (CMOSs). The signal processing circuit includes, for example, an automatic gain control (AGC) circuit and an analog to digital converter (ADC) and converts analog signals generated by the image pickup elements into digital signals (image data). Further, the signal processing circuit may perform, for example, various kinds of signal processing such as white balance correction processing, color tone correction processing, gamma correction processing, YCbCr conversion processing, and edge enhancement processing.

The reproduction control device 100 may further include, for example, a position detection device. The position detection device may be, for example, an arbitrary device capable of specifying a position, such as a GPS device or a device capable of specifying a position by using, for example, wireless communication with a base station or an access point.

For example, in the case where the reproduction control device 100 acquires information on reproduction according to the embodiment by communicating with an external object according to the embodiment via an external communication interface, the reproduction control device 100 does not need to include the communication interface 164.

For example, in the case where the reproduction control device 100 receives a signal that is broadcasted via an external signal reception device, the reproduction control device 100 does not need to include the signal reception device 166.

The reproduction control device 100 can be configured not to include the recording medium 156, the operation device 160, or the display device 162.

An example of the configuration of the reproduction control device 100 will be described with reference to FIG. 3 again. The reception unit 102 receives a broadcasted signal. Reception of a signal in the reception unit 102 is controlled by, for example, the control unit 106. Here, the reception unit 102 is, for example, a signal reception device.

The acquisition unit 104 acquires information on reproduction according to the embodiment from an external object. Acquisition of the information on reproduction according to the embodiment in the acquisition unit 104 from the external object is controlled by, for example, the control unit 106 (more specifically, for example, the acquisition control unit 110 to be described below). Here, the acquisition unit 104 is, for example, an acquisition device such as a communication device (for example, communication interface 164) capable of communicating with the external object or an image pickup device that captures an image of the external object.

The control unit 106 includes, for example, an MPU and controls the whole reproduction control device 100. Further, the control unit 106 includes, for example, the acquisition control unit 110, the determination unit 112, and the reproduction control unit 114 and initiatively performs the processing related to the reproduction control method according to the embodiment.

The acquisition control unit 110 initiatively performs the processing (1) (acquisition control processing) and acquires the information on reproduction of a content signal according to the embodiment from the external object. The acquisition control unit 110 acquires the information on reproduction of a content signal according to the embodiment from the external object by, for example, controlling an acquisition device constituting the acquisition unit 104 or an external acquisition device having a function corresponding to that of the acquisition unit 104.

The determination unit 112 initiatively performs the processing (2) (determination processing) and determines whether or not a reproduction condition indicated by reproduction condition information according to the embodiment contained in the information on reproduction of the acquired content signal is satisfied.

More specifically, the determination unit 112 performs, for example, the determination processing according to the first example described in the foregoing item (2-1) to the determination processing according to another example described in the foregoing item (2-10).

The reproduction control unit 114 initiatively performs the processing (3) (reproduction control processing). In the case where the determination unit 112 determines that the reproduction condition is satisfied, the reproduction control unit 114 decrypts a content signal received via a channel indicated by channel identification information according to the embodiment contained in the information on reproduction of the acquired content signal with the use of key information according to the embodiment contained in the information on reproduction of the acquired content signal and reproduces the content signal.

As the processing (3) (reproduction control processing), the reproduction control unit 114 can also perform, for example, the reproduction control processing according to the first example described in the foregoing item (3-1) to the reproduction control processing according to the fourth example described in the foregoing item (3-4).

The control unit 106 includes, for example, the acquisition control unit 110, the determination unit 112, and the reproduction control unit 114 and therefore initiatively performs the processing related to the reproduction control method according to the embodiment.

With the configuration shown in, for example, FIG. 3, the reproduction control device 100 performs the processing related to the reproduction control method according to the embodiment (for example, the processing (1) (acquisition control processing) to the processing (3) (reproduction control processing)).

Therefore, with the configuration shown in, for example, FIG. 3, the reproduction control device 100 can control reproduction of a content signal that is broadcasted via the predetermined channel.

By performing the processing related to the reproduction control method according to the embodiment, the reproduction control device 100 controls reproduction of a content signal transmitted via the predetermined channel on the basis of the reproduction condition indicated by the reproduction condition information acquired in the processing (1) (acquisition control processing). Therefore, because the reproduction control device 100 performs the processing related to the reproduction control method according to the embodiment, it is possible to cause a device (for example, a device existing in a specific place or a device corresponding to a specific user) that satisfies the reproduction condition indicated by the acquired reproduction condition information to selectively reproduce a content signal that is transmitted via the predetermined channel.

The reproduction control device according to the embodiment decrypts a content signal received via the channel (predetermined channel) indicated by the channel identification information acquired in the processing (1) (acquisition control processing) with the use of the key information acquired in the processing (1) (acquisition control processing) and reproduces the content signal. Therefore, for example, the reproduction control device according to the embodiment can reproduce even a content signal broadcasted via a channel that is not preset in the reproduction control device according to the embodiment.

With the configuration shown in, for example, FIG. 3, the reproduction control device 100 can exhibit an effect, such as improvement of usability for a user, which is caused by performing the foregoing processing related to the reproduction control method according to the embodiment.

Note that the configuration of the reproduction control device according to the embodiment is not limited to the configuration shown in FIG. 3.

For example, one or two or more of the acquisition control unit 110, the determination unit 112, and the reproduction control unit 114 shown in FIG. 3 are separated from the control unit 106 (for example, are achieved by individual processing circuits) in the reproduction control device according to the embodiment.

In the case where the reproduction control device according to the embodiment receives a signal that is broadcasted via, for example, an external signal reception device having a function and a configuration similar to those of the reception unit 102, the reproduction control device according to the embodiment does not need to include the reception unit 102.

In the case where the reproduction control device according to the embodiment acquires the information on reproduction according to the embodiment by controlling, for example, an external acquisition device having a function and a configuration similar to those of the acquisition unit 104, the reproduction control device according to the embodiment does not need to include the acquisition unit 104.

The reproduction control device according to the embodiment may further include, for example, a position specification unit (not illustrated) that specifies a position (or estimates a position) of the reproduction control device 100. In the case where the position specification unit (not illustrated) is provided, the reproduction control device according to the embodiment can perform the processing (2) (determination processing) with the use of a position specified (or estimated) in the position specification unit (not illustrated). Here, the position specification unit (not illustrated) is, for example, a position detection device such as a GPS device or a device capable of specifying a position by using, for example, wireless communication with a base station or an access point.

In the foregoing description, the embodiment has been described exemplifying the reproduction control device. However, the embodiment is not limited to this embodiment. The embodiment is applicable to various devices such as a tablet device, communication devices such as a mobile phone and a smartphone, a video/music playback device (or video/music recording and playback device), a game console, and a computer such as a personal computer (PC). The embodiment is also applicable to, for example, a processing integrated circuit (IC) that can be incorporated into the foregoing devices.

The embodiment has been described exemplifying the external object. However, the embodiment is not limited to this embodiment. The embodiment is applicable to various devices capable of communicating with the reproduction control device according to the embodiment, such as "a device (for example, an RF tag (transponder), an IC card (transponder), or a reader/writer (interrogator)) which is capable of performing wireless communication with the reproduction control device according to the embodiment using a wireless communication technology such as a communication technology using NFC or an RFID technology" and "a device capable of communicating with the reproduction control device according to the embodiment by an arbitrary communication method in which a communicable range is equal to or smaller than an area where a content signal is broadcasted". The embodiment is also applicable to various codes such as a two-dimensional code including a matrix-type two-dimensional code and a three-dimensional code.

The embodiment has been described exemplifying the broadcast transmission station. However, the embodiment is not limited to this embodiment. The embodiment is applicable to devices and systems having various configurations capable of broadcasting a signal, such as a transmission device that transmits a signal, which is denoted by a reference sign 50 in FIG. 1, and an antenna in a wireless manner and a transmission device that transmits a signal in a wired manner.

### (Program according to the embodiment)

A program causing a computer to function as the reproduction control device according to the embodiment (for example, a program capable of causing the computer to execute the processing related to the reproduction control method according to the embodiment such as the processing (1) (acquisition control processing) to the processing (3) (reproduction control processing)) is executed by a processor or the like in the computer, and therefore it is possible to control reproduction of a content signal that is broadcasted via a predetermined channel.

The program causing a computer to function as the reproduction control device according to the embodiment is executed by a processor or the like in the computer, and therefore it is possible to exhibit the foregoing effects caused by the processing related to the reproduction control method according to the embodiment.

The present disclosure is limited only by the appended claims.

For example, the program (computer program) causing the computer to function as the reproduction control device according to the embodiment has been provided above. However, the embodiment can also provide a recording medium storing the foregoing program.

The above-described configuration is an example of the embodiment and, of course, pertains to the technical scope of an embodiment of the present disclosure.

### Reference Signs List

- 10, 20: external object
- 50: broadcast transmission station
- 100: reproduction control device
- 102: reception unit
- 104: acquisition unit
- 106: control unit
- 110: acquisition control unit
- 112: determination unit
- 114: reproduction control unit

## Claims

1. A reproduction control device comprising:
an acquisition control unit (110) configured to acquire, from an external object, information on reproduction of an encrypted content signal, the information containing channel identification information indicating a channel via which an encrypted content signal is broadcasted, reproduction condition information indicating a reproduction condition that is a condition to be satisfied for reproducing the encrypted content signal, and key information for decrypting the encrypted content signal;
a determination unit (112) configured to determine whether or not the reproduction condition indicated by the acquired reproduction condition information is satisfied; and
a reproduction control unit (114) configured to decrypt the encrypted content signal received via the channel indicated by the acquired channel identification information with the use of the acquired key information and reproduce the encrypted content signal, in the case where it is determined that the reproduction condition is satisfied,
**characterized in**
**that** the encrypted content signal that is broadcasted via the channel indicated by the channel identification information is encrypted to correspond to first key information contained in the information on reproduction and to second key information different from the first key information, and
**that** the reproduction control unit (114) is configured to decrypt the encrypted content signal received via the channel indicated by the acquired channel identification information with the use of the acquired first key information and the second key information stored in a recording medium and to reproduce the encrypted content signal.

2. The reproduction control device according to claim 1,
wherein the reproduction condition includes a condition regarding a reception state of a signal that is broadcasted via the channel indicated by the channel identification information, and
wherein the determination unit (112) is configured to determine whether or not the condition regarding the reception state is satisfied on the basis of the reception state of the signal that is broadcasted via the channel indicated by the channel identification information and determines whether or not the reproduction condition is satisfied on the basis of a determination result of the condition regarding the reception state.

3. The reproduction control device according to claim 2,
wherein the determination unit (112) is configured
to determine that the condition regarding the reception state is satisfied in the case where the signal that is broadcasted via the channel indicated by the channel identification information is received, and
to determine that the condition regarding the reception state is not satisfied in the case where the signal that is broadcasted via the channel indicated by the channel identification information is not received.

4. The reproduction control device according to claim 3,
wherein, in the case where it is determined that the condition regarding the reception state is satisfied and then it is determined that the condition regarding the reception state is not satisfied, the determination unit (112) does not newly perform determination with the use of the reproduction condition indicated by the reproduction condition information which has been used for determining that the condition regarding the reception state is not satisfied, and
wherein, when the reproduction condition information is newly acquired, the determination unit (112) determines whether or not a reproduction condition indicated by the reproduction condition information that is newly acquired is satisfied.

5. The reproduction control device according to any preceding claim,
wherein the information on reproduction further contains object identification information uniquely indicating the external object,
wherein the acquisition control unit (110) is configured to store the acquired object identification information in a recording medium,
wherein the reproduction condition includes a condition regarding a combination of a plurality of pieces of the object identification information, and
wherein the determination unit (112) is configured to determine whether or not the condition regarding the combination is satisfied on the basis of the acquired object identification information and the object identification information stored in the recording medium and to determine whether or not the reproduction condition is satisfied on the basis of a determination result of the condition regarding the combination.

6. The reproduction control device according to any preceding claim,
wherein the reproduction condition includes a condition regarding a period in which reproduction of the content signal that is broadcasted via the channel indicated by the channel identification information is allowed, and
wherein the determination unit (112) is configured to determine whether or not the condition regarding the period in which reproduction is allowed is satisfied and to determine whether or not the reproduction condition is satisfied on the basis of a determination result of the condition regarding the period in which reproduction is allowed.

7. The reproduction control device according to any preceding claim,
wherein the reproduction condition includes a condition regarding an effective period of the key information in which use of the key information is allowed, and
wherein the determination unit (112) is configured to determine whether or not the condition regarding the effective period of the key information is satisfied and to determine whether or not the reproduction condition is satisfied on the basis of a determination result of the condition regarding the effective period of the key information, in particular wherein, in the case where it is determined that the condition regarding the effective period of the key information is not satisfied, the determination unit (112) deletes the key information.

8. The reproduction control device according to any preceding claim,
wherein the reproduction condition includes a condition regarding a position where reproduction of the content signal that is broadcasted via the channel indicated by the channel identification information is allowed, and
wherein the determination unit (112) is configured to determine whether or not the condition regarding the position is satisfied and to determine whether or not the reproduction condition is satisfied on the basis of a determination result of the condition regarding the position,
and/or wherein the reproduction condition includes a condition regarding a number of times of reproduction in which reproduction of the content signal that is broadcasted via the channel indicated by the channel identification information is allowed, and
wherein the determination unit (112) is configured to determine whether or not a number of times of reproduction of the encrypted content signal satisfies the condition regarding the number of times of reproduction and to determine whether or not the reproduction condition is satisfied on the basis of a determination result of the condition regarding the number of times of reproduction.

9. The reproduction control device according to any preceding claim,
wherein the reproduction condition includes a condition regarding an effective number of times of the key information in which use of the key information is allowed, and
wherein the determination unit (112) is configured to determine whether or not a number of times of use of the key information satisfies the condition regarding the effective number of times of the key information and to determine whether or not the reproduction condition is satisfied on the basis of a determination result of the condition regarding the effective number of times of the key information, in particular wherein, in the case where it is determined that the condition regarding the effective number of times of the key information is not satisfied, the determination unit deletes the key information.

10. The reproduction control device according to any preceding claim,
wherein the reproduction condition includes a condition regarding a user in which reproduction of the encrypted content signal that is broadcasted via the channel indicated by the channel identification information is allowed, and
wherein the determination unit (112) is configured to determine whether or not the condition regarding a user of the reproduction control device is satisfied on the basis of user identification information indicating at least one of the reproduction control device and the user and to determine whether or not the reproduction condition is satisfied on the basis of a determination result of the condition regarding a user.

11. The reproduction control device according to any preceding claim,
wherein the reproduction control unit (114) is configured
to set a way to reproduce the content signal received via the channel indicated by the acquired channel identification information on the basis of user identification information indicating at least one of the reproduction control device and a user of the reproduction control device, and
to reproduce the encrypted content signal in accordance with the set way to reproduce the content signal.

12. The reproduction control device according to any preceding claim,
wherein the second key information is key information that is stored in the recording medium in advance or is key information that is acquired from an external device different from the external object and is recorded in the recording medium.

13. The reproduction control device according to any preceding claim,
wherein the information on reproduction further contains acquisition source information indicating an acquisition source of a reproduction application that is usable for reproducing the content signal that is broadcasted via the channel indicated by the channel identification information, and
wherein the reproduction control unit (114) is configured
to acquire the reproduction application from the acquisition source indicated by the acquisition source information in the case where there is no application capable of reproducing the received encrypted content signal, and
to reproduce the received encrypted content signal with the use of the acquired reproduction application.

14. A reproduction control method executed by a reproduction control device, the method comprising:
a step of acquiring, from an external object, information on reproduction of an encrypted content signal, the information containing channel identification information indicating a channel via which an encrypted content signal is broadcasted, reproduction condition information indicating a reproduction condition that is a condition to be satisfied for reproducing the encrypted content signal, and key information for decrypting the encrypted content signal;
a step of determining whether or not the reproduction condition indicated by the acquired reproduction condition information is satisfied; and
a step of decrypting the encrypted content signal received via the channel indicated by the acquired channel identification information with the use of the acquired key information and reproducing the encrypted content signal in the case where it is determined that the reproduction condition is satisfied,
**characterized in**
**that** the encrypted content signal that is broadcasted via the channel indicated by the channel identification information is encrypted to correspond to first key information contained in the information on reproduction and second key information different from the first key information, and
**that** the step of decrypting is configured to decrypt the encrypted content signal received via the channel indicated by the acquired channel identification information with the use of the acquired first key information and the second key information stored in a recording medium and to reproduce the encrypted content signal.

15. A program causing a computer to execute the steps of the method of claim 14 when said program is carried out by the computer.

## Patentansprüche

1. Wiedergabesteuervorrichtung, die Folgendes aufweist:
eine Beschaffungssteuereinheit (110), ausgebildet zum Beschaffen von Informationen über Wiedergabe eines verschlüsselten Inhaltssignals aus einem externen Objekt, wobei die Informationen Kanalidentifikationsinformationen, die einen Kanal angeben, über den ein verschlüsseltes Inhaltssignal ausgestrahlt wird, Wiedergabebedingungsinformationen, die die Wiedergabebedingung angeben, die eine Bedingung ist, die zum Wiedergeben des verschlüsselten Inhaltssignals zu erfüllen ist, und Schlüsselinformationen zum Entschlüsseln des verschlüsselten Inhaltssignals enthalten;
eine Bestimmungseinheit (112) ausgebildet zum Bestimmen, ob die Wiedergabebedingung, die durch die beschafften Wiedergabebedingungsinformationen angegeben wird, erfüllt ist oder nicht; und
eine Wiedergabesteuereinheit (114), ausgebildet zum Entschlüsseln des verschlüsselten Inhaltssignals, das über den durch die beschafften Kanalidentifikationsinformationen angegebenen Kanal empfangen wird, unter Verwendung der beschafften Schlüsselinformationen und Wiedergeben des verschlüsselten Inhaltssignals, falls bestimmt wird, dass die Wiedergabebedingung erfüllt ist,
**dadurch gekennzeichnet, dass**
das verschlüsselte Inhaltssignal, das über den durch die Kanalidentifikationsinformationen angegebenen Kanal ausgestrahlt wird, verschlüsselt wird, um den in den Informationen über Wiedergabe enthaltenen ersten Schlüsselinformationen und von den ersten Schlüsselinformationen verschiedenen zweiten Schlüsselinformationen zu entsprechen, und
die Wiedergabesteuereinheit (114) ausgebildet ist zum Entschlüsseln des verschlüsselten Inhaltssignals, das über den durch die beschafften Kanalidentifikationsinformationen angegebenen Kanal empfangen wird, unter Verwendung der beschafften ersten Schlüsselinformationen und der zweiten Schlüsselinformationen, die in einem Aufzeichnungsmedium gespeichert sind, und zum Wiedergeben des verschlüsselten Inhaltssignals.

2. Wiedergabesteuervorrichtung nach Anspruch 1,
wobei die Wiedergabebedingung eine Bedingung hinsichtlich eines Empfangszustands eines Signals aufweist, das über den durch die Kanalidentifikationsinformationen angegebenen Kanal ausgestrahlt wird, und
wobei die Bestimmungseinheit (112) ausgebildet ist zum Bestimmen, ob die Bedingung hinsichtlich des Empfangszustands erfüllt ist, auf der Basis des Empfangszustands des Signals, das über den durch die Kanalidentifikationsinformationen angegebenen Kanal ausgestrahlt wird, und auf der Basis eines Bestimmungsergebnisses der Bedingung hinsichtlich des Empfangszustands bestimmt, ob die Wiedergabebedingung erfüllt ist oder nicht.

3. Wiedergabesteuervorrichtung nach Anspruch 2,
wobei die Bestimmungseinheit (112) ausgebildet ist zum
Bestimmen, dass die Bedingung hinsichtlich des Empfangszustands erfüllt ist, falls das Signal, das über den durch die Kanalidentifikationsinformationen angegebenen Kanal ausgestrahlt wird, empfangen wird, und
Bestimmen, dass die Bedingung des Empfangszustands nicht erfüllt ist, falls das Signal, dass über den durch die Kanalidentifikationsinformationen angegebenen Kanal ausgestrahlt wird, nicht empfangen wird.

4. Wiedergabesteuervorrichtung nach Anspruch 3,
wobei, falls bestimmt wird, dass die Bedingung hinsichtlich des Empfangszustands erfüllt ist und dann bestimmt wird, dass die Bedingung hinsichtlich des Empfangszustands nicht erfüllt ist, die Bestimmungseinheit (112) nicht erneut Bestimmung unter Verwendung der durch die Wiedergabebedingungsinformationen angegebenen Wiedergabebedingung, die zur Bestimmung verwendet wurde, dass die Bedingung hinsichtlich des Empfangszustands nicht erfüllt ist, durchführt und
wobei, wenn die Wiedergabebedingungsinformationen neu beschafft werden, die Bestimmungseinheit (112) bestimmt, ob eine durch die Wiedergabebedingungsinformationen, die neu beschafft sind, angegebene Wiedergabebedingung erfüllt ist oder nicht.

5. Wiedergabesteuervorrichtung nach einem der vorhergehenden Ansprüche,
wobei die Informationen über Wiedergabe ferner Objektidentifikationsinformationen enthalten, die das externe Objekt eindeutig angeben,
wobei die Beschaffungssteuereinheit (110) ausgebildet ist zum Speichern der beschafften Objektidentifikationsinformationen in einem Aufzeichnungsmedium,
wobei die Wiedergabebedingung eine Bedingung hinsichtlich einer Kombination einer Vielzahl von Elementen der Objektidentifikationsinformationen aufweist und
wobei die Bestimmungseinheit (112) ausgebildet ist zum Bestimmen, ob die Bedingung hinsichtlich der Kombination erfüllt ist, auf der Basis der beschafften Objektidentifikationsinformationen und der in dem Aufzeichnungsmedium gespeicherten Objektidentifikationsinformationen und zum Bestimmen, ob die Wiedergabebedingung erfüllt ist oder nicht, auf der Basis eines Bestimmungsergebnisses der Bedingung hinsichtlich der Kombination.

6. Wiedergabesteuervorrichtung nach einem der vorhergehenden Ansprüche,
wobei die Wiedergabebedingung eine Bedingung hinsichtlich eines Zeitraums aufweist, in dem Wiedergabe des Inhaltssignals, das über den durch die Kanalidentifikationsinformationen angegebenen Kanal ausgestrahlt wird, erlaubt ist, und
wobei die Bestimmungseinheit (112) ausgebildet ist zum Bestimmen, ob die Bedingung hinsichtlich des Zeitraums, in dem Wiedergabe erlaubt ist, erfüllt ist oder nicht, und zum Bestimmen, ob die Wiedergabebedingung erfüllt ist oder nicht, auf der Basis eines Bestimmungsergebnisses der Bedingung hinsichtlich des Zeitraums, in dem Wiedergabe erlaubt ist.

7. Wiedergabesteuervorrichtung nach einem der vorhergehenden Ansprüche,
wobei die Wiedergabebedingung eine Bedingung hinsichtlich eines effektiven Zeitraums der Schlüsselinformation aufweist, in dem Verwendung der Schlüsselinformationen erlaubt ist, und
wobei die Bestimmungseinheit (112) ausgebildet ist zum Bestimmen, ob die Bedingung hinsichtlich des effektiven Zeitraums der Schlüsselinformationen erfüllt ist oder nicht, und zum Bestimmen, ob die Wiedergabebedingung erfüllt ist oder nicht, auf der Basis eines Bestimmungsergebnisses der Bedingung hinsichtlich des effektiven Zeitraums der Schlüsselinformationen, wobei insbesondere, falls bestimmt wird, dass die Bedingung hinsichtlich des effektiven Zeitraums der Schlüsselinformationen nicht erfüllt ist, die Bestimmungseinheit (112) die Schlüsselinformationen löscht.

8. Wiedergabesteuervorrichtung nach einem der vorhergehenden Ansprüche,
wobei die Wiedergabebedingung eine Bedingung hinsichtlich einer Position aufweist, wo Wiedergabe des Inhaltssignals, das über den durch die Kanalidentifikationsinformationen angegebenen Kanal ausgestrahlt wird, erlaubt ist, und
wobei die Bestimmungseinheit (112) ausgebildet ist zum Bestimmen, ob die Bedingung hinsichtlich der Position erfüllt ist oder nicht und zum Bestimmen, ob die Wiedergabebedingung erfüllt ist oder nicht, auf der Basis eines Bestimmungsergebnisses der Bedingung hinsichtlich der Position,
und/oder wobei die Wiedergabebedingung eine Bedingung hinsichtlich einer Anzahl von Malen der Wiedergabe aufweist, bei denen Wiedergabe des Inhaltssignals, das über den durch die Kanalidentifikationsinformationen angegebenen Kanal ausgestrahlt wird, erlaubt ist, und
wobei die Bestimmungseinheit (112) ausgebildet ist zum Bestimmen, ob eine Anzahl von Malen der Wiedergabe des verschlüsselten Inhaltssignals die Bedingung hinsichtlich der Anzahl von Malen der Wiedergabe erfüllt oder nicht, und zum Bestimmen, ob die Wiedergabebedingung erfüllt ist oder nicht, auf der Basis eines Bestimmungsergebnisses der Bedingung hinsichtlich der Anzahl von Malen der Wiedergabe.

9. Wiedergabesteuervorrichtung nach einem der vorhergehenden Ansprüche,
wobei die Wiedergabebedingung eine Bedingung hinsichtlich einer effektiven Anzahl von Malen der Schlüsselinformation, bei denen Verwendung der Schlüsselinformationen erlaubt ist, aufweist und
wobei die Bestimmungseinheit (112) ausgebildet ist zum Bestimmen, ob eine Anzahl von Malen der Verwendung der Schlüsselinformationen die Bedingung hinsichtlich der effektiven Anzahl von Malen der Schlüsselinformationen erfüllt oder nicht, und zum Bestimmen, ob die Wiedergabebedingung erfüllt ist oder nicht, auf der Basis eines Bestimmungsergebnisses der Bedingung hinsichtlich der effektiven Anzahl von Malen der Schlüsselinformation, wobei insbesondere, falls bestimmt wird, dass die Bedingung hinsichtlich der effektiven Anzahl von Malen der Schlüsselinformationen nicht erfüllt ist, die Bestimmungseinheit die Schlüsselinformationen löscht.

10. Wiedergabesteuervorrichtung nach einem der vorhergehenden Ansprüche,
wobei die Wiedergabebedingung eine Bedingung hinsichtlich eines Benutzers aufweist, bei der Wiedergabe des verschlüsselten Inhaltssignals, das über den durch die Kanalidentifikationsinformationen angegebenen Kanal ausgestrahlt wird, erlaubt ist, und
wobei die Bestimmungseinheit (112) ausgebildet ist zum Bestimmen, ob die Bedingung hinsichtlich eines Benutzers der Wiedergabesteuervorrichtung erfüllt ist oder nicht, auf der Basis von Benutzeridentifikationsinformationen, die die Wiedergabesteuervorrichtung und/oder den Benutzer angeben, und zum Bestimmen, ob die Wiedergabebedingung erfüllt ist oder nicht, auf der Basis eines Bestimmungsergebnisses der Bedingung hinsichtlich eines Benutzers.

11. Wiedergabesteuervorrichtung nach einem der vorhergehenden Ansprüche,
wobei die Wiedergabesteuereinheit (114) ausgebildet ist zum
Festlegen einer Wiedergabeweise des über den durch die beschafften Kanalidentifikationsinformationen angegebenen Kanal empfangenen Inhaltssignals auf der Basis von Benutzeridentifikationsinformationen, die die Wiedergabesteuervorrichtung und/oder einen Benutzer der Wiedergabesteuervorrichtung angeben, und
Wiedergeben des verschlüsselten Inhaltssignals gemäß der festgelegten Wiedergabeweise des Inhaltssignals.

12. Wiedergabesteuervorrichtung nach einem der vorhergehenden Ansprüche,
wobei die zweiten Schlüsselinformationen Schlüsselinformationen sind, die in dem Aufzeichnungsmedium im Voraus gespeichert werden, oder Schlüsselinformationen sind, die von einer externen Vorrichtung beschafft werden, die von dem externen Objekt verschieden ist, und in dem Aufzeichnungsmedium aufgezeichnet werden.

13. Wiedergabesteuervorrichtung nach einem der vorhergehenden Ansprüche,
wobei die Informationen über Wiedergabe ferner Beschaffungsquelleninformationen enthalten, die eine Beschaffungsquelle einer Wiedergabeanwendung angeben, die zum Wiedergeben des Inhaltssignals, das über den durch die Kanalidentifikationsinformationen angegebenen Kanal ausgestrahlt wird, verwendbar ist, und
wobei die Wiedergabesteuereinheit (114) ausgelegt ist zum
Beschaffen der Wiedergabeanwendung von der durch die Beschaffungsquelleninformationen angegebenen Beschaffungsquelle, falls es keine Anwendung gibt, die das empfangene verschlüsselte Inhaltssignal wiedergeben kann, und
Wiedergeben des empfangenen verschlüsselten Inhaltssignals unter Verwendung der beschafften Wiedergabeanwendung.

14. Wiedergabesteuerverfahren, das durch eine Wiedergabesteuervorrichtung ausgeführt wird, wobei das Verfahren die folgenden Schritte aufweist:
Beschaffen von Informationen über Wiedergabe eines verschlüsselten Inhaltssignals aus einem externen Objekt, wobei die Informationen Kanalidentifikationsinformationen, die einen Kanal angeben, über den ein verschlüsseltes Inhaltssignal ausgestrahlt wird, Wiedergabebedingungsinformationen, die die Wiedergabebedingung angeben, die eine Bedingung ist, die zum Wiedergeben des verschlüsselten Inhaltssignals zu erfüllen ist, und Schlüsselinformationen zum Entschlüsseln des verschlüsselten Inhaltssignals enthalten;
Bestimmen, ob die Wiedergabebedingung, die durch die beschafften Wiedergabebedingungsinformationen angegeben wird, erfüllt ist oder nicht; und
Entschlüsseln des verschlüsselten Inhaltssignals, das über den durch die beschafften Kanalidentifikationsinformationen angegebenen Kanal empfangen wird, unter Verwendung der beschafften Schlüsselinformationen und Wiedergeben des verschlüsselten Inhaltssignals, falls bestimmt wird, dass die Wiedergabebedingung erfüllt ist,
**dadurch gekennzeichnet, dass**
das verschlüsselte Inhaltssignal, das über den durch die Kanalidentifikationsinformationen angegebenen Kanal ausgestrahlt wird, verschlüsselt wird, um den in den Informationen über Wiedergabe enthaltenen ersten Schlüsselinformationen und von den ersten Schlüsselinformationen verschiedenen zweiten Schlüsselinformationen zu entsprechen, und
der Schritt des Entschlüsselns ausgebildet ist zum Entschlüsseln des über den durch die beschafften Kanalidentifikationsinformationen angegebenen Kanal empfangenen verschlüsselten Inhaltssignals unter Verwendung der beschafften ersten Schlüsselinformationen und der zweiten Schlüsselinformationen, die in einem Aufzeichnungsmedium gespeichert sind, und zum Wiedergeben des verschlüsselten Inhaltssignals.

15. Programm, das bewirkt, dass ein Computer die Schritte des Verfahrens nach Anspruch 14 ausführt, wenn das Programm durch den Computer ausgeführt wird.

## Revendications

1. Dispositif de commande de reproduction comprenant :
une unité de commande d'acquisition (110) configurée pour acquérir, à partir d'un objet externe, des informations sur la reproduction d'un signal de contenu chiffré, les informations contenant des informations d'identification de canal indiquant un canal par lequel un signal de contenu chiffré est diffusé, des informations de condition de reproduction indiquant une condition de reproduction qui est une condition à satisfaire pour reproduire le signal de contenu chiffré, et des informations de clé pour déchiffrer le signal de contenu chiffré ;
une unité de détermination (112) configurée pour déterminer si la condition de reproduction indiquée par les informations de condition de reproduction acquises est satisfaite ou non ; et
une unité de commande de reproduction (114) configurée pour déchiffrer le signal de contenu chiffré reçu via le canal indiqué par les informations d'identification de canal acquises en utilisant des informations de clé acquises, et reproduire le signal de contenu chiffré, dans le cas où il est déterminé que la condition de reproduction est satisfaite,
**caractérisé en ce que**
le signal de contenu chiffré qui est diffusé via le canal indiqué via les informations d'identification de canal est chiffré pour correspondre à de premières informations de clé contenues dans les informations sur la reproduction et à de secondes informations de clé différentes des premières informations de clé, et
**en ce que** l'unité de commande de reproduction (114) est configurée pour déchiffrer le signal de contenu chiffré reçu via le canal indiqué par les informations d'identification de canal acquises en utilisant les premières informations de clé acquises et les secondes informations de clé stockées dans un support d'enregistrement, et pour reproduire le signal de contenu chiffré.

2. Dispositif de commande de reproduction selon la revendication 1,
dans lequel la condition de reproduction comprend une condition concernant un état de réception d'un signal qui est diffusé via le canal indiqué par les informations d'identification de canal, et
dans lequel l'unité de détermination (112) est configurée pour déterminer si la condition concernant l'état de réception est satisfaite ou non sur la base de l'état de réception du signal qui est diffusé via le canal indiqué par les informations d'identification de canal et détermine si la condition de reproduction est satisfaite ou non sur la base d'un résultat de détermination de la condition concernant l'état de réception.

3. Dispositif de commande de reproduction selon la revendication 2,
dans lequel l'unité de détermination (112) est configurée pour
déterminer que la condition concernant l'état de réception est satisfaite dans le cas où le signal qui est diffusé via le canal indiqué par les informations d'identification de canal est reçu, et
déterminer que la condition concernant l'état de réception n'est pas est satisfaite dans le cas où le signal qui est diffusé via le canal indiqué par les informations d'identification de canal n'est pas reçu.

4. Dispositif de commande de reproduction selon la revendication 3,
dans lequel, dans le cas où il est déterminé que la condition concernant l'état de réception est satisfaite et qu'ensuite il est déterminé que la condition concernant l'état de réception n'est pas satisfaite, l'unité de détermination (112) n'effectue pas une nouvelle fois une détermination en utilisant la condition de reproduction indiquée par les informations de condition de reproduction qui ont été utilisées pour déterminer que la condition concernant l'état de réception n'est pas satisfaite, et
dans lequel, lorsque les informations de condition de reproduction sont à nouveau acquises, l'unité de détermination (112) détermine si une condition de reproduction indiquée par les informations de condition de reproduction qui sont nouvellement acquises est satisfaite ou non.

5. Dispositif de commande de reproduction selon l'une quelconque des revendications précédentes,
dans lequel les informations sur la reproduction contiennent en outre des informations d'identification d'objet indiquant uniquement l'objet externe,
dans lequel l'unité de commande d'acquisition (110) est configurée pour stocker les informations d'identification d'objet acquises dans un support d'enregistrement,
dans lequel la condition de reproduction comprend une condition concernant une combinaison d'une pluralité d'éléments des informations d'identification d'objet, et
dans lequel l'unité de détermination (112) est configurée pour déterminer si la condition concernant la combinaison est satisfaite ou non sur la base des informations d'identification d'objet acquises et des informations d'identification d'objet stockées dans le support d'enregistrement, et pour déterminer si la condition de reproduction est satisfaite ou non sur la base d'un résultat de détermination de la condition concernant la combinaison.

6. Dispositif de commande de reproduction selon l'une quelconque des revendications précédentes,
dans lequel la condition de reproduction comprend une condition concernant une période dans laquelle la reproduction du signal de contenu qui est diffusé via le canal indiqué par les informations d'identification de canal est autorisée, et
dans lequel l'unité de détermination (112) est configurée pour déterminer si la condition concernant la période dans laquelle la reproduction est autorisée est satisfaite ou non, et pour déterminer si la condition de reproduction est satisfaite ou non sur la base d'un résultat de détermination de la condition concernant la période dans laquelle la reproduction est autorisée.

7. Dispositif de commande de reproduction selon l'une quelconque des revendications précédentes,
dans lequel la condition de reproduction comprend une condition concernant une période effective des informations de clé dans laquelle l'utilisation des informations de clé est autorisée, et
dans lequel l'unité de détermination (112) est configurée pour déterminer si la condition concernant la période effective des informations de clé est satisfaite ou non et pour déterminer si la condition de reproduction est satisfaite ou non sur la base d'un résultat de détermination de la condition concernant la période effective des informations de clé, en particulier dans lequel, dans le cas où il est déterminé que la condition concernant la période effective des informations de clé n'est pas satisfaite, l'unité de détermination (112) efface les informations de clé.

8. Dispositif de commande de reproduction selon l'une quelconque des revendications précédentes,
dans lequel la condition de reproduction comprend une condition concernant une position dans laquelle la reproduction du signal de contenu qui est diffusé via le canal indiqué par les informations d'identification de canal est autorisée, et
dans lequel l'unité de détermination (112) est configurée pour déterminer si la condition concernant la position est satisfaite ou non et pour déterminer si la condition de reproduction est satisfaite ou non sur la base d'un résultat de détermination de la condition concernant la position,
et/ou dans lequel la condition de reproduction comprend une condition concernant un nombre de fois de reproduction où la reproduction du signal de contenu qui est diffusé via le canal indiqué par les informations d'identification de canal est autorisée, et
dans lequel l'unité de détermination (112) est configurée pour déterminer si un nombre de fois de reproduction du signal de contenu chiffré satisfait ou non la condition concernant le nombre de fois de reproduction, et pour déterminer si la condition de reproduction est satisfaite ou non sur la base du résultat de détermination de la condition concernant le nombre de fois de reproduction.

9. Dispositif de commande de reproduction selon l'une quelconque des revendications précédentes,
dans lequel la condition de reproduction comprend une condition concernant un nombre de fois effectif des informations de clé où l'utilisation des informations de clé est autorisée, et
dans lequel l'unité de détermination (112) est configurée pour déterminer si un nombre de fois d'utilisation des informations de clé satisfait ou non la condition concernant le nombre de fois effectif des informations de clé, et pour déterminer si la condition de reproduction est satisfaite ou non sur la base d'un résultat de détermination de la condition concernant le nombre de fois effectif des informations de clé, en particulier dans lequel, dans le cas où il est déterminé que la condition concernant le nombre de fois effectif des informations de clé n'est pas satisfaite, l'unité de détermination efface les informations de clé.

10. Dispositif de commande de reproduction selon l'une quelconque des revendications précédentes,
dans lequel la condition de reproduction comprend une condition concernant un utilisateur où la reproduction du signal de contenu chiffré qui est diffusé via le canal indiqué par les informations d'identification de canal est autorisée, et
dans lequel l'unité de détermination (112) est configurée pour déterminer si la condition concernant un utilisateur du dispositif de commande de reproduction est satisfaite ou non sur la base d'informations d'identification d'utilisateur indiquant au moins l'un du dispositif de commande de reproduction et de l'utilisateur, et pour déterminer si la condition de reproduction est satisfaite ou non sur la base d'un résultat de détermination de la condition concernant un utilisateur.

11. Dispositif de commande de reproduction selon l'une quelconque des revendications précédentes,
dans lequel l'unité de commande de reproduction (114) est configurée pour
définir un moyen pour reproduire le signal de contenu reçu via le canal indiqué par les informations d'identification de canal acquises sur la base d'informations d'identification d'utilisateur indiquant au moins l'un du dispositif de commande de reproduction et d'un utilisateur du dispositif de commande de reproduction, et
reproduire le signal de contenu chiffré conformément au moyen défini pour reproduire le signal de contenu.

12. Dispositif de commande de reproduction selon l'une quelconque des revendications précédentes,
dans lequel les secondes informations de clé sont des informations de clé qui sont stockées à l'avance dans le support d'enregistrement ou des information de clé qui sont acquises à partir d'un dispositif externe différent de l'objet externe et qui sont enregistrées dans le support d'enregistrement.

13. Dispositif de commande de reproduction selon l'une quelconque des revendications précédentes,
dans lequel les informations sur la reproduction contiennent en outre des informations de source d'acquisition indiquant une source d'acquisition d'une application de reproduction qui est utilisable pour reproduire le signal de contenu qui est diffusé via le canal indiqué par les informations d'identification de canal, et
dans lequel l'unité de commande de reproduction (114) est configurée pour
acquérir l'application de reproduction à partir de la source d'acquisition indiquée par les informations de source d'acquisition dans le cas où il n'existe aucune application capable de reproduire le signal de contenu chiffré reçu, et
reproduire le signal de contenu chiffré reçu en utilisant l'application de reproduction acquise.

14. Procédé de commande de reproduction exécuté par un dispositif de commande de reproduction, le procédé comprenant :
une étape d'acquisition, à partir d'un objet externe, d'informations sur la reproduction d'un signal de contenu chiffré, les informations contenant des informations d'identification de canal indiquant un canal par lequel un signal de contenu chiffré est diffusé, des informations de condition de reproduction indiquant une condition de reproduction qui est une condition à satisfaire pour reproduire le signal de contenu chiffré, et des informations de clé pour déchiffrer le signal de contenu chiffré ;
une étape de détermination pour déterminer si la condition de reproduction indiquée par les informations de condition de reproduction acquises est satisfaite ou non ; et
une étape de déchiffrage du signal de contenu chiffré reçu via le canal indiqué par les informations d'identification de canal acquises en utilisant les informations de clé acquises, et de reproduction du signal de contenu chiffré dans le cas où il est déterminé que la condition de reproduction est satisfaite,
**caractérisé en ce que** le signal de contenu chiffré qui est diffusé via le canal indiqué par les informations d'identification de canal est chiffré pour correspondre à de premières informations de clé contenues dans les informations sur la reproduction et à de secondes informations de clé différentes des premières informations de clé, et
**en ce que** l'étape de déchiffrage est configurée pour déchiffrer le signal de contenu chiffré reçu via le canal indiqué par les informations d'identification de canal acquises en utilisant les premières informations de clé acquises et les secondes informations de clé stockées dans un support d'enregistrement, et pour reproduire le signal de contenu chiffré.

15. Programme amenant un ordinateur à exécuter les étapes du procédé de la revendication 14 lorsque ledit programme est exécuté par l'ordinateur.
